(19) **Europäisches Patentamt / European Patent Office / Office européen des brevets**

(11) **EP 4 459 388 B1**

(12) # FASCICULE DE BREVET EUROPEEN

(45) Date de publication et mention de la délivrance du brevet:
**29.10.2025   Bulletin 2025/44**

(21) Numéro de dépôt: **24159334.2**

(22) Date de dépôt: **23.02.2024**

(51) Classification Internationale des Brevets (IPC):
**G04G 9/00** *(2006.01)*      **G04G 21/02** *(2010.01)*

(52) Classification Coopérative des Brevets (CPC):
**G04G 9/007; G04G 21/02**

(54) **OBJET PORTABLE, NOTAMMENT MONTRE, MUNI D'UN DISPOSITIF DE DÉTECTION DU PASSAGE DE LA LIGNE DE KARMAN, ET PROCÉDÉ DE DÉTECTION**

TRAGBARES OBJEKT, INSBESONDERE UHR, MIT EINER VORRICHTUNG ZUR DETEKTION DES DURCHGANGS DER KARMAN-LINIE, UND DETEKTIONSVERFAHREN

PORTABLE OBJECT, IN PARTICULAR WATCH, PROVIDED WITH A DEVICE FOR DETECTING THE PASSAGE OF THE KARMAN LINE, AND DETECTION METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **03.05.2023   EP 23171366**

(43) Date de publication de la demande:
**06.11.2024   Bulletin 2024/45**

(73) Titulaire: **ETA SA Manufacture Horlogère Suisse
2540 Grenchen (CH)**

(72) Inventeurs:
• **CHRISTE, Laurent
2504 Bienne (CH)**

• **DARDANELLI, Andréa
2000 Neuchâtel (CH)**
• **SURMELY, Gérard
1404 Villars-Epeney (CH)**
• **DUBOIS, Fabian
2400 Le Locle (CH)**
• **BOVET, Jean-Luc
4500 Solothurn (CH)**

(74) Mandataire: **ICB SA
Faubourg de l'Hôpital, 3
2001 Neuchâtel (CH)**

(56) Documents cités:
WO-A1-2021/213640      CH-A2- 711 684
CH-A2- 713 220            US-A- 6 144 619
US-A1- 2005 231 391      US-A1- 2008 130 418

**Description**

Domaine technique de l'invention

L'invention concerne un objet portable, en particulier une montre présentant une application spatiale, pour astronautes ou autres voyageurs dans l'espace au moyen d'une fusée ou navette spatiale. Plus précisément, l'invention concerne un objet portable, notamment une montre, muni d'un dispositif de détection du passage de la ligne de karman, et un procédé de détection du passage de la ligne de karman. La ligne de Karman définit la limite conventionnelle entre l'atmosphère terrestre et l'espace. En général, il est convenu qu'elle correspond à une altitude de 100 km, mais cette altitude varie selon diverses organisations, notamment entre 85 km et 110 km. La ligne de Karman constitue également la limite à partir de laquelle, pour se maintenir en vol, un engin doit voler sensiblement à une vitesse orbitale lui permettant de maintenir son orbite autour de la terre.

Arrière-plan technologique

Diverses montres ont été portées par des astronautes lors de missions dans l'espace. Certaines montres portées par des astronautes ont été sélectionnées pour leur robustesse et aussi leur précision, sans présenter de fonctions spécifiques à un vol ou une mission dans l'espace. D'autres montres, notamment du type électronique, permettent des fonctions spécifiques utiles pour des missions dans l'espace. Ces fonctions spécifiques concernent en général la mesure du temps, par exemple pour un compte à rebours et/ou des alarmes.

On connaît par exemple le document US2008/130418A1 lequel divulgue une montre électronique comportant des fonctions de type temporisateur, prévues pour être utilisées pas un utilisateur embarqué dans une fusée, lors d'un vol spatial.

On connaît également le document CH711684A2 lequel divulgue une montre électronique comportant un accéléromètre et une unité de calcul. La montre est conçue pour déterminer et afficher l'énergie potentielle fournie ou reçue par un utilisateur, lors d'une course, entre un événement initial s'avérant à une première altitude et un événement final s'avérant à une deuxième altitude.

Résumé de l'invention

La présente invention se propose de fournir un objet portable, en particulier une montre capable de détecter de manière assez précise le passage de la ligne de Karman par une fusée ou navette spatiale (par la suite nommée généralement 'fusée'), au moins pour un type donné de fusée (aussi nommé un type de lanceur dans le domaine technique des vols spatiaux), dans laquelle cette montre est embarquée.

En particulier, un objectif de la présente invention est de fournir un objet portable, en particulier une montre permettant la détection d'un passage de la ligne de Karman de manière autonome lors d'un vol spatial, notamment sans réception de signaux de communication extérieurs et donc sans utiliser un système de positionnement global (sans 'GPS') et sans réception de signaux de la fusée relatifs aux données en temps réel du vol spatial concerné au cours duquel il est prévu de détecter le passage de la ligne de Karman par la fusée au moyen de l'objet portable embarqué dans cette fusée.

Un autre objectif de la présente invention est de fournir un objet portable, en particulier une montre, qui soit capable de détecter, avec une précision satisfaisante, un passage de la ligne de Karman par cet objet portable qui comprend des moyens techniques relativement limités mais précis et peu encombrants, pouvant aisément être incorporés dans un objet portable et notamment dans une montre.

La présente invention concerne un objet portable par un utilisateur comprenant une mémoire, une base de temps et un dispositif de détection formé par un capteur d'accélération, capable de mesurer une accélération de l'objet portable selon trois axes orthogonaux définissant un référentiel lié à l'objet portable (c'est-à-dire de mesurer un vecteur d'accélération de l'objet portable dans un référentiel tridimensionnel de cet objet portable), et par une unité électronique agencée pour pouvoir traiter des mesures fournies par le capteur d'accélération. Le dispositif de détection est agencé, en association avec la mémoire, pour pouvoir détecter de manière autonome, lors d'un vol spatial d'une fusée d'un type donné, un passage de la ligne de Karman par l'objet portable embarqué dans cette fusée, la ligne de Karman $L_K$ étant définie par une altitude donnée $H_D$ ou une altitude Hs sélectionnable par un utilisateur, directement ou via une autre variable spatiale sélectionnable. Une détection d'un passage de la ligne de Karman par la fusée peut être effectuée par l'unité électronique sur la base de mesures périodiques du vecteur d'accélération de l'objet portable, effectuées par le capteur d'accélération depuis un décollage de la fusée jusqu'au passage de la ligne de Karman, et soit d'une valeur de référence prédéterminée qui est stockée préalablement audit décollage dans la mémoire, soit d'une valeur de référence calculée dans l'unité électronique et déterminée par un facteur de correction Fc, prédéterminé et stocké préalablement audit décollage dans la mémoire, et une altitude Hs sélectionnée préalablement audit décollage pour la ligne de Karman $L_K$ par l'utilisateur. La valeur de référence prédéterminée et le facteur de correction Fc sont relatifs à l'altitude donnée $H_D$.

L'unité électronique est agencée pour pouvoir calculer l'évolution temporelle d'une distance de comparaison sur la base des mesures périodiques du vecteur d'accélération de l'objet portable et comparer au cours du temps cette distance de comparaison avec la valeur de référence prédéterminée, respectivement avec la valeur de référence calculée, pour ainsi pouvoir détecter un passage de la ligne de Karman par l'objet portable et donc par la fusée.

Ainsi, de manière remarquable, l'objet portable selon l'invention est conçu pour pouvoir détecter de manière autonome le passage de la ligne de Karman par cet objet portable embarqué dans une fusée d'un type donné, avec comme seuls moyens techniques nécessaires une mémoire et un dispositif de détection comprenant un capteur d'accélération, capable de mesurer les composantes d'un vecteur d'accélération relatif à l'objet portable dans un référentiel lié à cet objet portable, et une unité électronique de traitement des mesures fournies par le capteur d'accélération. L'objet portable selon l'invention ne nécessite ainsi aucun gyromètre trois axes qui peut certes être miniature, formé par un microsystème électromécanique (en anglais nommé aussi par l'acronyme 'MEMS'), mais qui est généralement peu précis, en tous cas pas suffisamment précis pour permettre une détection précise de l'évolution de l'orientation d'un référentiel propre audit capteur d'accélération lors d'un vol spatial, de manière à pouvoir déterminer en tout temps entre le décollage et le passage de la ligne de Karman la composante verticale de l'accélération de mouvement de la fusée et ainsi permettre de déterminer son altitude au cours du temps. L'invention s'affranchit donc de ce problème lié aux gyromètres de petites dimensions qui s'avèrent être relativement peu précis et donc incapables de fournir avec une précision suffisante des mesures de vitesse angulaire de l'objet portable permettant de déterminer son orientation instantanée et l'évolution de sa position dans l'espace, en particulier son altitude, alors qu'un capteur d'accélération de petites dimensions, du même ordre de grandeur, et relativement peu onéreux peut fournir des mesures d'accélération précises selon trois axes.

Dans un mode de réalisation principal, l'objet portable est une montre.

Dans une variante préférée, le capteur d'accélération est un microsystème électromécanique (en anglais nommé aussi par l'acronyme 'MEMS'). Un tel capteur est de petites dimensions, de sorte que ce capteur peut aisément être incorporé dans une montre. A noter que, malgré sa petite taille, un tel capteur d'accélération peut être très précis. En sélectionnant un tel capteur d'accélération, ladite valeur de référence prédéterminée est en outre avantageusement définie sur la base d'une accélération de mouvement nominale pour la fusée. Par 'accélération de mouvement', on comprend une accélération correspondant à la dérivée temporelle de la vitesse, cette accélération de mouvement définissant en tout temps un vecteur tangent à la trajectoire de la fusée, et donc de l'objet portable, dans l'espace, c'est-à-dire un vecteur colinéaire avec le vecteur de direction instantanée de la fusée. Par le terme 'nominale', on comprend une valeur donnée dans la spécification du type de fusée considéré ou pour une certaine fusée ; c'est donc une valeur théorique, ici en fonction du temps, prévue pour la fusée considérée et qui résulte de sa conception et de la planification d'un vol spatial avec une telle fusée, en particulier de son lancement jusqu'au passage de la ligne de Karman dans le cadre de la présente invention. On remarquera cependant qu'un accéléromètre du type MEMS fournit non une accélération de mouvement, mais une accélération propre qui, en l'absence d'une donnée suffisamment précise quant à l'orientation instantanée de la fusée dans l'espace, ne permet pas de déterminer l'accélération de mouvement et en particulier la composante verticale d'une telle accélération à laquelle on pense en premier lieu pour déterminer l'altitude instantanée de la fusée. La présente invention résout de manière remarquable ce problème, comme ceci ressortira clairement de la description détaillée par la suite.

Dans une variante préférée, le dispositif de détection est agencé de manière que ladite distance de comparaison est calculée sur la base des normes des vecteurs d'accélération mesurés par le capteur d'accélération et dont les composantes sont données dans ledit référentiel lié à l'objet portable, l'unité électronique étant agencée pour pouvoir calculer ces normes. En effet, le capteur d'accélération fournit des vecteurs d'accélération dans un propre référentiel, mais la norme du vecteur d'accélération est indépendante du référentiel, à savoir qu'elle est invariable quelle que soit l'orientation spatiale du référentiel dans lequel ce vecteur d'accélération est donné, de sorte qu'une indétermination de l'orientation du référentiel de mesure pour les mesures de l'accélération ne pose plus aucun problème. Cette variante préférée est très avantageuse car elle permet donc de s'affranchir du fait qu'un référentiel lié à l'objet portable, à savoir le référentiel défini par le capteur d'accélération qui est fixe relativement à l'objet portable, a une orientation, relativement à un référentiel terrestre, qui est variable au cours d'un vol spatial entre la base de lancement de la fusée et la ligne de Karman, notamment du fait que la fusée ne suit pas une trajectoire linéaire verticale. De plus, l'orientation de l'objet portable peut varier au cours du temps relativement à la fusée, par des mouvements de l'utilisateur qui le porte.

Selon une variante avantageuse, le facteur de correction est égal à ladite valeur de référence prédéterminée divisée par l'altitude donnée.

Selon un mode de réalisation général, la valeur de référence prédéterminée est définie sur la base d'au moins une fonction théorique d'une variable spatiale relative à ladite fusée, depuis un décollage de cette fusée jusqu'à l'altitude donnée pour la ligne de Karman.

Dans une variante générale, l'objet portable est agencé de manière qu'un enregistrement du fait que la ligne de Karman a été dépassée est effectué dans une partie protégée de sa mémoire, de sorte qu'un utilisateur de cet objet portable ne puisse pas écrire dans la partie protégée.

**EP 4 459 388 B1**

L'invention concerne également une méthode de détection, selon la revendication 1 annexée, d'un passage de la ligne de Karman, au moyen d'un objet portable selon l'invention, par une fusée d'un type donné dans laquelle est embarqué cet objet portable. Des variantes avantageuses sont données dans les revendications dépendantes de cette revendication 1.

Brève description des figures

L'invention sera décrite ci-après de manière plus détaillée à l'aide des dessins annexés, donnés à titre d'exemples nullement limitatifs, dans lesquels :

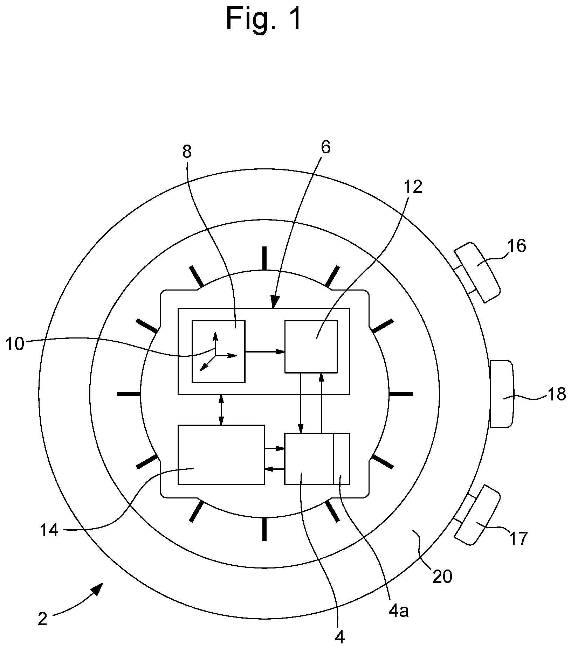

- la Figure 1 représente schématiquement une montre selon l'invention avec diverses parties électroniques formant cette montre ;

- la Figure 2 représente une trajectoire, interrompue sur le dessin, suivie par une fusée, lors d'un vol dans l'espace, entre le décollage et le passage de la ligne de Karman, ainsi que diverses variables, relatives au vol le long de cette trajectoire, intervenant dans une méthode de détection d'un passage de la ligne de Karman selon l'invention et à sa mise en œuvre dans un dispositif de détection d'un passage de la ligne de Karman selon un mode principal de l'invention ;

- la Figure 3 montre, de manière agrandie relativement à la Figure 2, une somme vectorielle de diverses accélérations intervenant dans la méthode de détection d'un passage de la ligne de Karman selon l'invention, les axes orthogonaux $X_t$ et $Z_t$ étant parallèles aux axes X et Z de la Figure 2 et ayant leur origine au point $P_S(t)$ sur la trajectoire $T_F(x)$ de la fusée concernée, ce point $P_S(t)$ définissant une altitude $H_F(t)$ et un éloignement horizontal $E_H(t)$ pour la fusée au cours du temps ;

- la Figure 4 montre une courbe théorique de l'accélération de mouvement d'une fusée d'un certain type en fonction du temps ;

- la Figure 5 montre une courbe donnant l'angle d'inclinaison de ladite fusée, au cours du temps, tel que mesuré lors d'un vol de la fusée et une courbe théorique pour cet angle d'inclinaison ;

- la Figure 6 montre une courbe donnant l'altitude théorique de ladite fusée au cours du temps ;

- les Figures 7A à 7D montrent divers messages donnés par la montre, selon une variante de réalisation, à un utilisateur lors d'un vol dans l'espace et une détection du passage de la ligne de Karman par la montre selon l'invention implémentant la méthode de détection selon l'invention ; et

- les Figures 8A et 8B montrent deux messages pouvant être indiqués par la montre, selon une variante de réalisation, à un utilisateur de la montre après une détection d'un passage de la ligne de Karman par cette montre et plus particulièrement après un vol spatial ou une mission spatiale terminé.

Description détaillée de l'invention

En référence aux figures, on décrira par la suite des modes de réalisation d'un objet portable selon l'invention constitué par une montre, ainsi qu'une méthode de détection du passage de la ligne de Karman par un tel objet portable selon un mode de réalisation principal de l'invention.

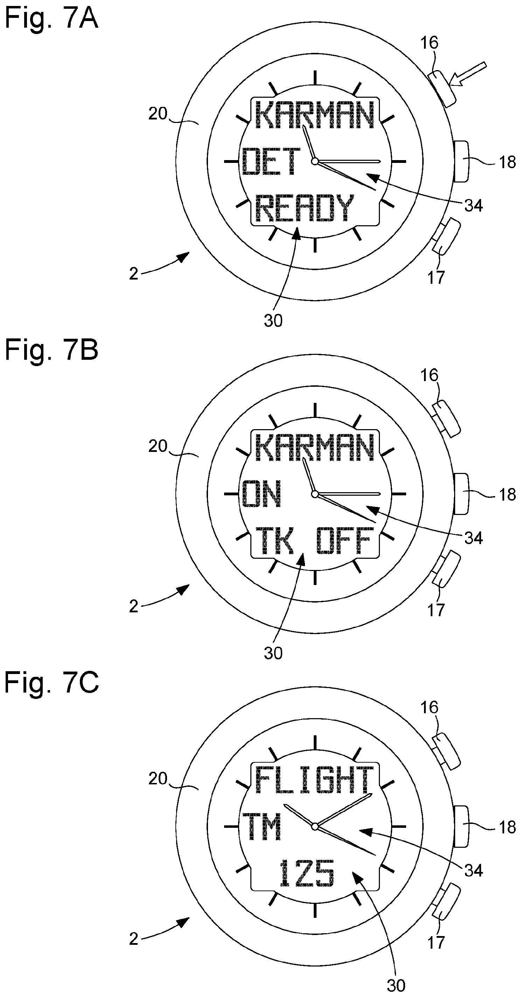

Selon un mode de réalisation général, la montre 2 comprend une mémoire 4 et un dispositif de détection 6, lequel comprend un capteur d'accélération 8, capable de mesurer un vecteur d'accélération de la montre dans un référentiel tridimensionnel 10 lié à la montre 2, et une unité électronique de traitement 12, nommée aussi 'unité électronique' par la suite, qui est agencée pour pouvoir traiter des mesures fournies par le capteur d'accélération 8. La montre comprend en outre une unité électronique de commande 14, laquelle est agencée pour pouvoir notamment activer le dispositif de détection 6 en réponse à un actionnement d'un organe de commande externe. Cette montre est munie de divers organes de commande externes, en particulier deux poussoirs 16 et 17 et une tige-couronne 18. On notera que la montre peut être munie de moyens de commande tactiles, notamment une glace tactile recouvrant des moyens d'affichage, de tels moyens de commande tactiles étant prévus par exemple pour des entrées de données dans la mémoire 4 de la montre et/ou commander l'affichage de certaines données par les moyens d'affichage, en particulier avant et après un vol spatial ou une mission spatiale. Dans une variante particulière montrée à la Figure 7A, la montre comprend un affichage analogique 34, formé par des aiguilles associées à une graduation, et un affichage digital 30 formé par un module électronique d'affichage définissant une majeure partie du cadran de la montre 2. On remarquera que les aiguilles peuvent être utilisées classiquement pour l'indication de données horaires, mais aussi pour indiquer d'autres choses, par exemple pour indiquer une étape en cours de la méthode de détection ou un événement comme le passage de la ligne Karman ou encore pour indiquer le bon déroulement d'une opération préliminaire à un vol ou son achèvement.

L'unité électronique 12 est agencée, en association avec le capteur d'accélération 8 et la mémoire 4, pour pouvoir détecter, au moins pour une fusée d'un type donné, un passage de la ligne de Karman $L_K$ par la fusée seulement au moyen de la montre 2 embarquée dans cette fusée. La détection est donc réalisée par la montre de manière autonome lors d'un vol spatial de la fusée par le dispositif de détection de cette montre. La ligne de Karman $L_K$ est définie par une altitude donnée $H_D$ ou une altitude sélectionnable Hs par un utilisateur, directement ou via la sélection d'une autre variable spatiale. Par 'altitude donnée', on comprend une altitude prédéfinie / prédéterminée par le fabricant de la montre ou par une personne ou société autorisée, et non par un utilisateur. Dans le cas d'une pluralité d'altitudes données, il est toutefois possible que celles-ci soient sélectionnables par un utilisateur, c'est-à-dire que l'utilisateur peut sélectionner une altitude donnée parmi la pluralité d'altitudes données.

Une détection d'un passage de la ligne de Karman $L_K$ par la fusée 22, dans laquelle est embarqué la montre 2, peut être effectuée par le dispositif de détection 6 sur la base de mesures périodiques du vecteur d'accélération de cette montre, effectuées par le capteur d'accélération 8 depuis un décollage de la fusée jusqu'au passage de la ligne de Karman, et d'une valeur de référence correspondant à une altitude définie pour cette ligne de Karman, cette valeur de référence étant enregistrée dans la mémoire 4 de la montre avant un vol spatial au cours duquel il est prévu de détecter le passage de ladite altitude définie pour ligne de Karman par la fusée au moyen de la montre embarquée dans cette fusée. Des variantes pour définir et calculer cette valeur de référence seront données par la suite. La montre comprend une base de temps permettant de déterminer successivement des périodes pour effectuer les mesures périodiques du vecteur d'accélération. Plus généralement, dans le cas d'un objet portable, cet objet portable comprend une base de temps agencée pour pouvoir déterminer des périodes successives et permettre ainsi au dispositif de détection d'effectuer des mesures périodiques du vecteur d'accélération. Dans une variante, la base de temps peut être une unité séparée du dispositif de détection et associée à ce dernier pour permettre notamment une activation périodique du capteur d'accélération. Dans une autre variante, la base de temps est incorporée dans le dispositif de détection. Dans une variante particulière, cette base de temps est directement associée au capteur d'accélération de manière à pouvoir cadencer les mesures du vecteur d'accélération.

Plus précisément, la valeur de référence est soit une valeur de référence prédéterminée qui est stockée au préalable dans la mémoire, soit une valeur de référence calculée dans l'unité électronique et déterminée par un facteur de correction Fc, prédéterminé et stocké préalablement dans la mémoire 4, et une altitude Hs sélectionnée pour la ligne de Karman $L_K$ par l'utilisateur. La valeur de référence prédéterminée et le facteur de correction sont relatifs à l'altitude donnée $H_D$. L'unité électronique 12 est agencée pour pouvoir calculer l'évolution temporelle d'une distance de comparaison sur la base des mesures périodiques de l'accélération de la fusée et comparer au cours du temps cette distance de comparaison avec la valeur de référence prédéterminée, respectivement avec la valeur de référence calculée, pour ainsi pouvoir détecter un passage de la ligne de Karman par la montre 2 et donc par la fusée 22. L'enregistrement de la valeur de référence dans la mémoire 4 est effectué avantageusement lors de la programmation 'en usine' de la montre ou ultérieurement au moyen d'un appareil spécifique, configuré pour pouvoir fournir à la montre cette valeur de référence. Dans une variante plus simple, on peut prévoir que la montre est agencée pour permettre l'introduction de la valeur de référence dans la montre, à savoir dans sa mémoire 4, via les organes de commande équipant la montre.

Selon une variante avantageuse, le facteur de correction Fc est égal à ladite valeur de référence prédéterminée divisée par ladite altitude donnée $H_D$.

Selon une variante préférée, la valeur de référence prédéterminée est définie sur la base d'au moins une fonction théorique d'une variable spatiale relative à ladite fusée, depuis un décollage de cette fusée jusqu'à l'altitude donnée $H_D$ pour la ligne de Karman $L_K$.

Dans une première réalisation particulière, la mémoire 4 est agencée pour contenir une pluralité de valeurs de référence prédéterminées qui sont respectivement relatives à une pluralité d'altitudes données $H_{Dj}$, j = 1 à J. Chacune des valeurs de référence prédéterminée est définie, de manière générale, sur la base d'au moins une fonction théorique d'une variable spatiale relative à la fusée concernée, depuis un décollage de cette fusée jusqu'à l'altitude donnée correspondante, chacune des altitudes données $H_{Dj}$ pouvant être sélectionnée, par un utilisateur, pour permettre une comparaison de ladite distance de comparaison au cours du temps, calculée lors d'une détection du passage de la ligne de Karman par la montre, avec la valeur de référence prédéterminée correspondante.

Dans une deuxième réalisation particulière, la mémoire 4 est agencée pour contenir une pluralité de facteurs de correction $F_{Cj}$, j = 1 à J, respectivement relatifs à une pluralité d'altitudes données $H_{Dj}$, j = 1 à J. Chacun des facteurs de correction $F_{Cj}$ peut être sélectionné, de manière automatique par le dispositif de détection ou éventuellement par un utilisateur, en fonction d'une altitude Hs sélectionnée par cet utilisateur pour la ligne de Karman $L_K$, pour permettre une comparaison de ladite distance de comparaison au cours du temps, calculée lors d'une détection du passage de la ligne de Karman par la montre, avec une valeur de référence déterminée par le facteur de correction sélectionné et l'altitude sélectionnée Hs.

Dans une variante avantageuse de la deuxième réalisation particulière, une pluralité de valeurs de référence prédéterminées sont respectivement définies pour la pluralité d'altitudes données $H_{Dj}$, chacune des valeurs de référence prédéterminée étant définie, de manière générale, sur la base d'au moins une fonction théorique d'une variable spatiale relative à la fusée concernée, depuis un décollage de cette fusée jusqu'à l'altitude donnée correspondante. La pluralité de facteurs de correction $F_{Cj}$ sont respectivement égaux à la pluralité de valeurs de référence prédéterminées respectivement divisées par la pluralité d'altitudes données $H_{Dj}$. Chaque facteur de correction permet d'obtenir, par une multiplication avec une altitude Hs sélectionnable et donc variable pour la ligne de Karman, une valeur de référence pour permettre une comparaison, dans l'unité électronique de la montre, avec une distance de comparaison fournie par le dispositif de détection lors d'un vol spatial de la fusée concernée et ainsi la détection du passage de la ligne de Karman par la montre et donc par la fusée.

Selon un mode de réalisation préféré, le capteur d'accélération 8 est formé par un microsystème électromécanique (MEMS).

Selon une variante préférée, dans le cas où seule une valeur de référence prédéterminée est prévue, cette valeur de référence prédéterminée est en outre définie sur la base d'une accélération de mouvement nominale pour la fusée. Dans le cas où une pluralité de valeurs de référence sont prévues, chaque valeur de référence prédéterminée est en outre définie sur la base d'une accélération de mouvement nominale pour la fusée, depuis un décollage de cette fusée jusqu'à l'altitude donnée $H_D$ pour la ligne de Karman.

On décrira ci-après une méthode de détection du passage de la ligne de Karman par une fusée au moyen d'une montre selon l'invention. La description suivante permet de mieux exposer comment diverses variables et fonctions sont définies et/ou obtenues et comment elles interviennent précisément dans le cadre de l'invention. Cette méthode de détection peut être mise en œuvre par une montre selon un mode de réalisation principal qui sera décrit par la suite.

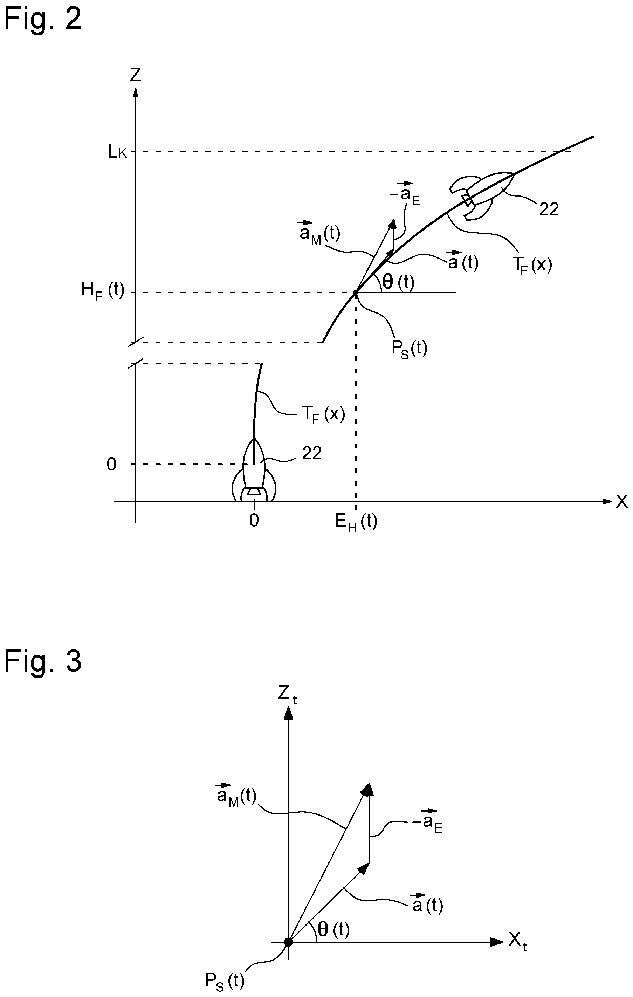

L'invention concerne une méthode de détection pour la détection du passage de la ligne de Karman $L_K$, définie par une altitude donnée $H_D$ ou par une altitude sélectionnée Hs, par une fusée 22 d'un type donné, lors d'un vol spatial de cette fusée, au moyen d'un objet portable par un utilisateur, notamment d'une montre 2 embarquée dans cette fusée et comprenant une mémoire 4, une base de temps et un dispositif de détection 6, lequel est formé par un capteur d'accélération 8, agencé pour mesurer un vecteur d'accélération propre $a_M$* de la montre dans un référentiel tridimensionnel 10 lié à cette montre, et par une unité électronique 12 agencée pour pouvoir traiter des mesures fournies par le capteur d'accélération, le vecteur d'accélération propre $a_M$* étant égal, en première approximation pour une fusée, à un vecteur d'accélération de mouvement a* de cette montre moins le vecteur de l'accélération terrestre $a_E$* en tout instant / en tout temps t. On notera que l'astérisque (*) est utilisé dans ce texte pour indiquer un vecteur, alors qu'aux Figures 2 et 3 les vecteurs sont indiqués, de manière conventionnelle, par des flèches situées au-dessus des variables concernées. De manière générale, le vecteur d'accélération propre de la montre est égal à une somme vectorielle des forces que subit cette montre, excepté la force de gravité, divisée par sa masse. En d'autres termes, l'accélération propre d'un objet est l'accélération que subit cet objet pour un observateur en chute libre.

La méthode de détection comprend une phase préliminaire, laquelle est préliminaire à l'embarquement de l'objet portable dans la fusée pour le vol spatial prévu, comprenant les étapes préliminaires suivantes :

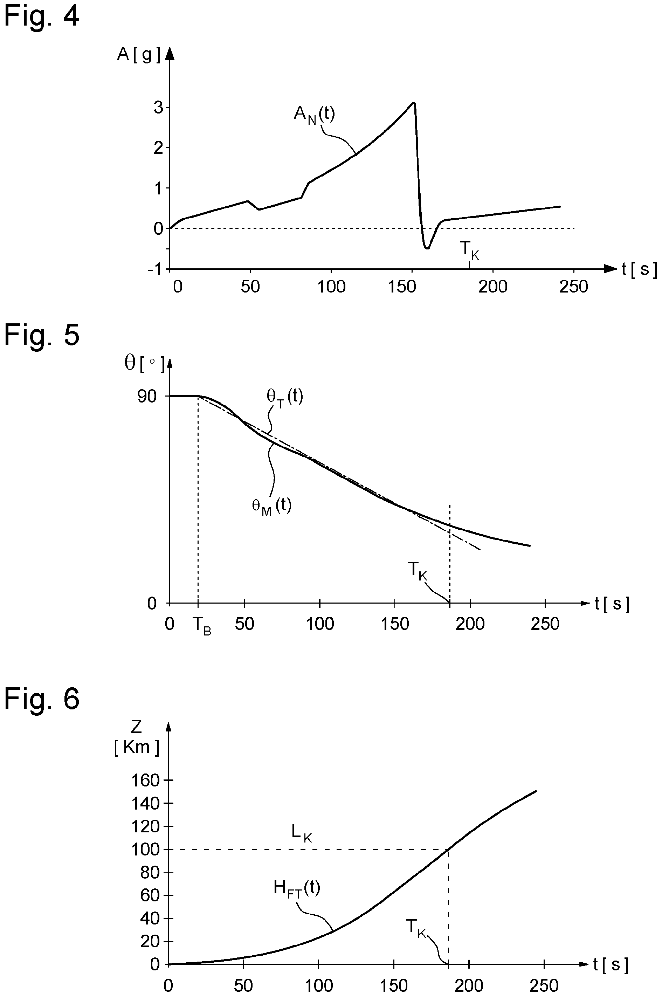

A) Fournir une accélération de mouvement nominale $A_N(t)$ pour la fusée 22, en fonction du temps t, depuis un décollage de cette fusée, définissant un temps zéro, au moins jusqu'à un passage par l'altitude donnée $H_D$ pour la ligne de Karman $L_K$, cette accélération de mouvement nominale étant une valeur scalaire (norme d'un vecteur d'accélération de mouvement nominale) dans une unité égale à l'attraction terrestre (cette valeur scalaire sans dimension correspondant donc à la norme du vecteur d'accélération de mouvement nominale divisée par la norme de l'attraction terrestre, voir Figure 4).

B) Fournir un angle d'inclinaison théorique $\theta_T(t)$ pour la fusée du type donné, relativement à un plan horizontal et en fonction du temps t, depuis le décollage de cette fusée jusqu'à au moins un passage par l'altitude donnée $H_D$ (voir Figure 5).

C) Fournir ou déterminer une durée de vol théorique $T_K$ pour la fusée du type donné entre le décollage de cette fusée jusqu'au passage par l'altitude donnée $H_D$.

D) Sur la base de ladite accélération de mouvement nominale et dudit angle d'inclinaison théorique, déterminer une accélération propre théorique $A_{PT}(t)$, en fonction du temps, pour la fusée du type donné, la valeur de cette accélération propre théorique étant définie, dans une unité égale à l'attraction terrestre, par la formule suivante :

$$A_{PT}(t) = \sqrt{1 + 2 \cdot A_N(t) \cdot \sin\theta_T(t) + A_N{}^2(t)}$$

E) Calculer, par des moyens numériques et/ou mathématiques, une distance de mesure théorique $D_{MT}$ définie par une double intégrale de l'accélération propre théorique $A_{PT}(t)$, entre le temps zéro (t = 0) correspondant au décollage de la fusée et le temps $T_K$ correspondant à la durée de vol théorique, ou de cette accélération propre théorique diminuée de la norme de l'accélération terrestre ; la distance de mesure théorique $D_{MT}$ divisée par l'altitude donnée $H_D$ pour la ligne de Karman $L_K$ définissant, pour la fusée du type donné, un facteur de correction $F_C$.

F) Enregistrer la distance de mesure théorique $D_{MT}$ et/ou le facteur de correction Fc dans la mémoire de la montre, ce facteur de correction Fc étant ensuite, avant un décollage de la fusée définissant un début dudit vol spatial, multiplié par l'altitude sélectionnée Hs, le cas échéant, de sorte à obtenir une distance de référence $D_{MR}$.

G) Avant le décollage de la fusée, activer le dispositif de détection de la montre embarquée dans cette fusée.

La méthode de détection comprend ensuite une phase de détection comprenant les étapes de détection suivantes :

H) Mesurer périodiquement, à une fréquence de mesure $F_M$, le vecteur d'accélération propre de la montre, dans le référentiel tridimensionnel de cette montre, au moyen dudit dispositif de détection, et calculer dans l'unité électronique, pour chaque mesure, la norme $A_M(t_n)$ du vecteur d'accélération propre mesuré, respectivement une norme corrigée égale à la norme $A_M(t_n)$ diminuée de la norme de l'accélération terrestre, $t_n$ étant un temps égal à n·P où n est un nombre de mesures effectuées au moins depuis le décollage de la fusée, incrémenté d'une unité à chaque nouvelle mesure, et P est la période temporelle définie par la fréquence de mesure.

I) Calculer de manière numérique, dans l'unité électronique, une double intégrale sur le temps, depuis le décollage de la fusée, respectivement au moins depuis le décollage de la fusée, de la norme du vecteur d'accélération propre de la montre, respectivement de cette norme diminuée de la norme de l'accélération terrestre, la norme du vecteur d'accélération propre étant déterminée sur la base desdites normes $A_M(t_n)$ du vecteur d'accélération propre mesuré périodiquement, pour obtenir des distances de comparaison $D_C(t_m)$ pour des temps $t_m$, avec m un nombre entier positif, chaque m correspondant à un dit nombre n.

J) Comparer chaque distance de comparaison $D_C(t_m)$ avec la distance de mesure théorique $D_{MT}$ dans le cas d'une altitude donnée $H_D$ ou avec la distance de référence $D_{MR}$ dans le cas d'une altitude sélectionnée Hs et, lorsqu'une distance de comparaison $D_C(t_m)$ est supérieure à la distance de mesure théorique $D_{MT}$, respectivement à la distance de référence $D_{MR}$, enregistrer dans la mémoire de l'objet portable une détection, par le dispositif de détection, du passage de la ligne de Karman par cet objet portable.

Dans une variante préférée de la méthode de détection, le capteur d'accélération prévu pour réaliser les mesures du vecteur d'accélération propre de la montre, et donc normalement de la fusée, est un microsystème électromécanique (MEMS) incorporé dans cette montre.

Concernant l'étape A), la Figure 4 donne un exemple pour la courbe de l'accélération de mouvement nominale $A_N(t)$, pour une certaine fusée, depuis le décollage de cette fusée jusqu'au-delà de la ligne de Karman définie par l'altitude donnée $H_D$. On notera que la fourniture de l'accélération $A_N(t)$ peut consister à fournir au moins une pluralité de valeurs prédéfinies de cette accélération $A_N(t)$ pour une pluralité de temps successifs, notamment périodiques, depuis le décollage au moins jusqu'au passage de l'altitude donnée. On notera encore que l'accélération de mouvement théorique $A_N(t)$ peut être momentanément négative, c'est-à-dire que la vitesse de la fusée peut momentanément diminuer, comme montré sur le graphe de la Figure 4. Ainsi, l'accélération de mouvement nominale est fournie avec son signe mathématique et doit être introduite avec ce signe mathématique dans la formule donnée à l'étape D).

Dans une variante, la fourniture de l'accélération $A_N(t)$ est effectuée via la fourniture de la distance parcourue théorique $L_{FT}(t)$ de la fusée au cours du temps, au moins pour une pluralité de temps successifs, notamment périodiques, depuis le décollage au moins jusqu'au passage de l'altitude donnée $H_D$. Ensuite, l'accélération $A_N(t)$ est déterminée, mathématiquement et/ou numériquement, de la distance théorique $L_{FT}(t)$ parcourue par la fusée en fonction du temps, via une double dérivée de cette distance théorique. Dans une autre variante, la fourniture de l'accélération $A_N(t)$ est effectuée via la fourniture de l'altitude théorique $H_{FT}(t)$ de la fusée au cours du temps, au moins pour une pluralité de temps successifs, notamment périodiques, et d'une trajectoire théorique $z = T_{FT}(x)$ de la fusée dans l'espace, depuis son point de départ au moins jusqu'au passage de l'altitude donnée (par simplification dans un plan vertical X-Z, z étant une variable correspondant à l'altitude et x une variable correspondant à une distance horizontale depuis le point de départ de la fusée). L'accélération de mouvement nominale $A_N(t)$ est ensuite déterminée, mathématiquement et/ou numériquement, de l'altitude théorique $H_{FT}(t)$ de la fusée et de la trajectoire théorique $T_{FT}(x)$ suivie par cette fusée dans l'espace, ces deux fonctions permettant d'obtenir la distance théorique $L_{FT}(t)$ susmentionnée.

Concernant l'étape B) de la méthode de détection, la Figure 5 donne un exemple pour la courbe de l'angle d'inclinaison théorique $\theta_T(t)$ de la fusée concernée en fonction du temps. La Figure 5 donne également une courbe $\theta_M(t)$ d'un angle d'inclinaison mesuré au cours du temps lors d'un vol spatial d'une fusée d'un certain type. On voit qu'une approximation linéaire, depuis un temps $T_B$ à partir duquel la fusée commence à s'incliner, est ici relativement précise. Jusqu'au temps $T_B$, la fusée suit une direction verticale de sorte que l'angle d'inclinaison théorique $\theta_T(t)$ vaut 90° entre le temps zéro et le temps $T_B$. On notera que la fourniture de l'angle d'inclinaison théorique $\theta_T(t)$ peut consister à fournir au moins une pluralité de valeurs prédéfinies de cet angle d'inclinaison théorique $\theta_T(t)$ pour une pluralité de temps successifs, notamment périodiques, depuis le décollage de la fusée au moins jusqu'au passage de l'altitude donnée.

La Figure 2 représente un exemple d'une trajectoire $z = T_F(x)$ de la fusée 22 (interrompue sur cette figure pour des questions d'échelle). On remarquera que les exemples donnés aux figures ne limitent nullement les courbes théoriques envisageables, lesquelles sont en général spécifiques pour chaque type de fusée (type de lanceur notamment pour une navette spatiale). L'angle d'inclinaison $\theta(t)$, à un instant t, entre la direction de la fusée au temps t et un plan horizontal est défini par la tangente à la trajectoire $z = T_F(x)$ de la fusée à sa position spatiale $P_S(t)$, la variable x étant une fonction du temps. Ainsi, la fonction tangente de l'angle $\theta(t)$ est égale à la dérivée de la trajectoire $T_F(x)$ par rapport à la distance horizontale x à la position spatiale $P_S(t)$ de la fusée. On a ainsi la relation mathématique $\tan\theta(t) = dT_F(x)/dx$ avec x = $E_H(t)$, $E_H(t)$ étant l'éloignement horizontal de la fusée depuis le point de départ en fonction du temps. De même, soit $T_{FT}(x)$ la trajectoire théorique de la fusée du type donné et $\theta_T(t)$ l'angle d'inclinaison théorique de cette fusée au temps t, l'angle d'inclinaison théorique $\theta_T(t)$ peut être déterminé, par des moyens mathématiques et/ou numériques, par la trajectoire théorique $z = T_{FT}(x)$ via la relation mathématique susmentionnée $\tan\theta_T(t) = dT_{FT}(x)/dx$ avec x = $E_{HT}(t)$, $E_{HT}(t)$ étant l'éloignement horizontal théorique de la fusée depuis un point de départ en fonction du temps. A noter que la fonction $E_{HT}(t)$ peut être déterminée, mathématiquement et/ou numériquement, sur la base de la trajectoire théorique $T_{FT}(x)$ et de l'accélération de mouvement nominale $A_N(t)$ ou de l'altitude théorique $H_{FT}(t)$ de la fusée en fonction du temps. Ainsi, dans une variante, la fourniture de l'angle d'inclinaison théorique $\theta_T(t)$, à l'étape B) de la méthode de détection, est effectuée via la fourniture de la trajectoire théorique $T_{FT}(x)$ de la fusée dans l'espace et l'éloignement horizontal théorique $E_{HT}(t)$ de cette fusée, cet éloignement horizontal théorique $E_{HT}(t)$ pouvant être notamment déterminé mathématiquement et/ou numériquement sur la base de l'accélération de mouvement nominal $A_N(t)$ et de la trajectoire théorique $z = T_{FT}(x)$ ou alternativement de cette trajectoire théorique et de l'altitude théorique $H_{FT}(t)$ de la fusée en fonction du temps.

Concernant l'étape C) relative à la durée de vol théorique $T_K$, il est possible dans une variante simplifiée de l'estimer sur la base d'au moins un vol spatial antérieur avec une fusée du type concerné. Dans une variante avantageuse ne nécessitant pas de vols antérieurs, il est prévu de déterminer la durée de vol théorique $T_K$ par des moyens mathématiques et numériques en se basant sur l'accélération de mouvement nominale $A_N(t)$ et l'angle d'inclinaison théorique $\theta_T(t)$ de la fusée. A cet effet, on peut effectuer la démarche suivante en définissant une distance théorique $L_T(t)$ parcourue par la fusée en fonction du temps. On peut établir la relation mathématique entre l'altitude théorique $H_{FT}(t)$ de la fusée en vol et la distance théorique $L_T(t)$ parcourue par cette fusée. Une variation infinitésimale / élémentaire de l'altitude théorique $dH_{FT}(t) = dL_T(t)·\sin \theta_T(t)$ où $dH_{FT}(t)$ est une variation infinitésimale / élémentaire de la distance théorique parcourue. D'autre part, la variation $dL_T(t) = V_N(t)·dt$ où $V_N(t)$ est la vitesse nominale de la fusée au temps t et dt est une variation infinitésimale / élémentaire du temps. La vitesse nominale $V_N(t)$ peut être déterminée de manière mathématique et/ou numérique sur la base de l'accélération de mouvement nominale $A_N(t)$, étant donné que la vitesse est égale à l'intégrale de l'accélération sur le temps. On peut donc définir la variation infinitésimale / élémentaire $dH_{FT}(t)$ de l'altitude théorique $H_{FT}(t)$, sur la base des relations mathématiques données ci-avant, en fonction de variables données (nominales / théoriques). On obtient :

$$dH_{FT}(t) = V_N(t)·\sin \theta_T(t)·dt \quad, \text{ avec } V_N(t) = \int_0^t A_N(t) \cdot dt$$

L'altitude théorique $H_{FT}(t)$ est égale à l'intégrale sur le temps de $dH_{FT}(t)$ effectuée par des moyens mathématiques et/ou numériques. Pour déterminer la durée de vol théorique $T_K$, on résout l'équation $H_{FT}(T) = H_D$, $H_D$ étant l'altitude donnée et T étant la variable.

La Figure 6 donne un exemple pour la courbe de l'altitude théorique $H_{FT}(t)$ en fonction du temps sur la base de la courbe de l'accélération de mouvement nominale $A_N(t)$ donnée à la Figure 4 et de la courbe de l'angle d'inclinaison théorique $\theta_T(t)$ donnée à la Figure 5.

Les étapes D) et E) de la méthode de détection sont remarquables par le fait qu'elles sont conçues pour permettre de déterminer précisément une distance de mesure théorique $D_{MT}$ correspondant à une valeur de référence prédéterminée à laquelle peut être comparée une distance de comparaison calculée ensuite précisément dans l'unité électronique de la montre, selon un mode de réalisation principal de l'invention, sur la base des mesures d'accélération propre, fournies par le capteur d'accélération agencé dans la montre, lors d'un vol spatial avec une fusée dans laquelle cette montre est embarquée. Dans ce mode de réalisation principal de la montre, il est prévu que le dispositif de détection autonome n'utilise comme moyens de mesure qu'un capteur d'accélération agencé pour pouvoir mesurer des vecteurs de l'accélération propre subie par la montre. La méthode prévoit de déterminer au préalable, c'est-à-dire dans une étape préliminaire qui précède le vol spatial concerné, une distance de mesure théorique $D_{MT}$ qui est une distance théorique fictive par le fait qu'elle ne correspond pas à une distance parcourue théoriquement par la fusée entre le sol et la ligne de Karman, mais à une distance théorique qui résulte du fait qu'on mesure une accélération propre de la montre. De plus, étant donné les moyens de mesure limités, il est prévu de fournir une valeur de référence qui ne dépend que de la norme de l'accélération propre dont le vecteur dans un référentiel de la montre 2 est fourni par le capteur d'accélération, avantageusement corrigée de la norme de l'accélération terrestre par une soustraction de celle-ci de la norme de l'accélération propre, et de la trajectoire de la fusée. Il est donc prévu de définir un passage de la ligne de Karman sur la base de la norme de l'accélération propre de la montre et donc normalement de la fusée dans laquelle elle est embarquée, cette norme étant indépendante de l'orientation spatiale du référentiel du capteur d'accélération, comme déjà indiqué.

La méthode de détection prend en compte le fait que la norme du vecteur d'accélération propre, pour une accélération de mouvement donnée, varie en fonction de l'inclinaison de la fusée. En effet, cette norme diminuée de la norme de l'accélération terrestre ne donne pas l'accélération de mouvement de la montre / de la fusée lorsque la fusée n'a pas une direction verticale. Les Figures 2 et 3 exposent, pour une fusée, la relation vectorielle entre l'accélération de mouvement a*, l'accélération propre mesurée $a_M$ * et l'accélération terrestre $a_E$ *. A la position spatiale Ps (t) de la fusée au temps t d'un vol spatial correspondent un vecteur d'accélération de mouvement a (t) * et un vecteur d'accélération propre mesuré $a_M$ (t) *, le vecteur d'accélération terrestre $a_E$* étant toujours vertical et indépendant de la position spatiale de la fusée. On remarquera que la petite accélération centripète que subit la fusée en s'inclinant progressivement n'est pas prise en compte dans la relation entre l'accélération propre, qui inclut une telle accélération centripète, et l'accélération de mouvement de la fusée, cette accélération centripète étant faible et insignifiante pour une fusée entre le sol et la ligne de Karman. La méthode de détection prévoit de calculer, dans une étape préliminaire au vol spatial, à savoir à l'étape D), une accélération propre théorique $A_{PT}(t)$ de la fusée au cours du temps t en fonction de l'accélération de mouvement nominale $A_N(t)$ et de l'angle d'inclinaison théorique $\theta_T(t)$ de la fusée fournis respectivement aux étapes A) et B). Ensuite, à l'étape E), la distance de mesure théorique $D_{MT}$ est calculée par une double intégrale de l'accélération propre théorique $A_{PT}(t)$, entre le temps zéro (t = 0) correspondant au décollage de la fusée et le temps $T_K$ correspondant à la durée de vol théorique calculée à l'étape C), ou avantageusement de cette accélération propre théorique diminuée de la norme de l'accélération terrestre $A_E$.

À noter que, en l'absence d'une information indiquant qu'on parle d'un vecteur d'accélération, il est question dans ce texte descriptif soit de la valeur de l'accélération mentionnée (longueur du vecteur avec le signe mathématique donné en fonction de la direction du mouvement, ce qui ne concerne dans la présente description que l'accélération de mouvement), soit de la norme d'un vecteur d'accélération (c'est-à-dire la valeur absolue de la longueur du vecteur, comme c'est le cas pour l'accélération propre de la fusée et pour l'accélération terrestre). Plus précisément, lorsqu'on mentionne une accélération, on comprend la valeur de cette accélération, et lorsqu'on mentionne la norme d'une accélération, on comprend la norme du vecteur d'accélération correspondant, c'est-à-dire la valeur absolue de l'accélération.

La distance de mesure théorique $D_{MT}$ divisée par l'altitude donnée $H_D$ pour la ligne de Karman $L_K$ définit dans le cadre de la méthode de détection selon l'invention, pour la fusée du type donné, un facteur de correction $F_C$.

A l'étape F) est prévu un enregistrement, préalablement à un vol spatial, à savoir avant le départ de la fusée, de la distance de mesure théorique $D_{MT}$ et/ou du facteur de correction Fc dans la mémoire de la montre. Le facteur de correction Fc est utile pour obtenir une distance de référence $D_{MR}$ lorsqu'il est prévu que l'utilisateur puisse fournir à la montre une altitude sélectionnée Hs pour la ligne de Karman, le facteur de correction Fc étant, dans ce cas, multiplié par l'altitude sélectionnée Hs pour la ligne de Karman pour calculer la distance de référence $D_{MR}$. On notera que cette distance de référence $D_{MR}$ est de fait une distance théorique approximative, étant donné l'approximation linéaire qui est faîte ici à partir de la distance de mesure théorique $D_{MT}$, laquelle est déterminée précisément pour l'altitude donnée $H_D$.

Les étapes H) à J) de la méthode de détection concernent les étapes de détection d'un passage par la ligne de Karman lors d'un vol spatial d'une fusée du type donné au moyen de l'objet portable selon l'invention, en particulier d'une montre selon le mode de réalisation principal. Ainsi, le dispositif de détection 6 de la montre 2 mesure périodiquement, à une fréquence de mesure $F_M$, les composantes du vecteur d'accélération propre de la montre, selon les trois axes orthogonaux du référentiel tridimensionnel défini par le capteur d'accélération, et ensuite l'unité électronique calcule, pour chaque mesure, la norme $A_M(t_n)$ de ce vecteur d'accélération propre mesuré à chaque temps de mesure $t_n$, respectivement une norme corrigée égale à la norme $A_M(t_n)$ diminuée de la norme de l'accélération terrestre $A_E$, selon que l'accélération propre théorique $A_{PT}(t)$ a été ou non diminuée de la norme de l'accélération terrestre dans le calcul de la distance de mesure théorique $D_{MT}$ à l'étape E). Pour pouvoir effectuer périodiquement des mesures du vecteur d'accélération propre de la montre, cette dernière comprend une base de temps agencée pour permettre de déterminer successivement des périodes correspondant à la fréquence de mesure prévue et ainsi au dispositif de détection de commander le capteur d'accélération pour qu'il effectue les mesures périodiques prévues.

Ensuite, en correspondance avec les calculs théoriques effectués dans les étapes préliminaires précédentes, l'unité électronique 12 calcule de manière numérique une double intégrale sur le temps, depuis le décollage de la fusée, de la norme de l'accélération propre $A_P(t)$ de la montre embarquée dans la fusée, respectivement de cette norme avantageusement diminuée de la norme de l'accélération terrestre. La norme de l'accélération propre $A_P(t)$ est déterminée, de manière générale, sur la base desdites normes $A_M(t_n)$ des vecteurs d'accélération propre mesurés périodiquement, pour obtenir des distances de comparaison $D_C(t_m)$ pour des temps $t_m$, avec m un nombre entier positif, chaque m correspondant à un dit nombre n. Dans une variante préférée, on calcule une distance de comparaison $D_C(t_n)$ pour chaque mesure intervenant aux temps $t_n$. Finalement, chaque distance de comparaison $D_C(t_m)$ est comparée, de préférence quasi en temps réel, avec la distance de mesure théorique $D_{MT}$ dans le cas d'une altitude donnée $H_D$, respectivement à la distance de référence $D_{MR}$ dans le cas d'une altitude sélectionnée Hs. Les distances de comparaison $D_C(t_m)$ sont des distances fictives, comme la distance de mesure théorique $D_{MT}$ et la distance de référence $D_{MR}$. Lorsqu'une distance de comparaison $D_C(t_m)$, pour un temps $t_m$, est supérieure à la distance de mesure théorique $D_{MT}$, respectivement à la distance de référence $D_{MR}$, l'unité électronique du dispositif de détection enregistre dans la mémoire de la montre le fait que la ligne de Karman $L_K$ a été dépassée par la montre et ainsi par la fusée. Le décollage de la fusée peut être facilement détecté sur la base des normes $A_M(t_n)$ de l'accélération propre mesurée périodiquement dès avant le décollage. En effet, tant que cette norme est sensiblement égale à la norme de l'accélération terrestre, l'unité électronique peut conclure que la fusée n'a pas encore décollé et déterminer un instant du décollage de la fusée par exemple lorsque la norme de l'accélération propre mesurée dépasse une certaine valeur limite donnée. Dans la variante principale avantageuse qui utilise la norme de l'accélération propre $A_P(t)$ de la montre diminuée de la norme de l'accélération terrestre $A_E$, on remarquera qu'il est avantageusement possible de commencer le calcul de l'intégrale sur cette accélération propre corrigée de l'attraction terrestre avant le décollage de la fusée étant donné que cette valeur est théoriquement nulle et en pratique sensiblement égale à zéro. Ainsi, la valeur de l'intégrale restera sensiblement égale à zéro avant le décollage de la fusée. On notera que les mesures de l'accélération propre par le capteur d'accélération sont avantageusement filtrées de manière à éliminer un bruit parasite éventuel.

Dans un mode de mise en œuvre particulier, la méthode de détection est caractérisée en ce que l'étape de calcul de la double intégrale sur le temps dans l'unité électronique, à l'étape I), consiste à effectuer une double intégrale par incréments en définissant, après chaque mesure de l'accélération propre, une valeur constante $A_C(t_n)$ pour la norme de l'accélération propre sur chaque période P entre les instants $t_{n-1}$ et $t_n$ de deux mesures successives, cette valeur constante étant déterminée par la norme $A_M(t_n)$ ou/et la norme $A_M(t_{n-1})$ ; à calculer, pour chaque période P, une augmentation de vitesse correspondant à ladite valeur constante, respectivement à la valeur constante diminuée de la norme de l'accélération terrestre, pour ensuite déterminer une vitesse estimée $V_E(t_n)$ au temps $t_n$, et une distance élémentaire $d_n$ sur la base de la valeur constante $A_C(t_n)$, respectivement de cette valeur constante diminuée de la norme de l'accélération terrestre et de la vitesse estimée $V_E(t_{n-1})$ au temps $t_{n-1}$, et ensuite à ajouter la distance élémentaire $d_n$ à la somme des distances élémentaires $d_1$ à $d_{n-1}$, obtenue suite à la mesure précédente de l'accélération propre, pour obtenir une distance de comparaison $D_C(t_n)$ pour le temps $t_n$. On remarquera que les calculs prévus dans l'unité électronique nécessitent avantageusement une relativement faible puissance de calcul.

Dans une variante dans laquelle il est prévu qu'un utilisateur puisse sélectionner une altitude sélectionnée Hs pour la limite de Karman $L_K$, cette sélection est indirecte, à savoir qu'il est prévu que l'utilisateur puisse sélectionner, via des organes de commande dont est muni la montre, un angle d'inclinaison de la fusée qui est prévu pour le passage de la ligne de Karman par cette fusée. La sélection de l'angle d'inclinaison peut consister à introduire une valeur quelconque en fonction de données pour le vol spatial concerné ou à sélectionner, dans une liste pouvant être affichée successivement par la montre, une valeur spécifique parmi une pluralité de valeurs proposées. Cette sélection, comme dans le cas où il est prévu de fournir directement une altitude sélectionnée Hs, est effectuée avant le vol spatial concerné avec la fusée du type donné. L'altitude sélectionnée Hs est déterminée en fonction de l'angle d'inclinaison sélectionné, l'unité électronique 12 étant agencée pour pouvoir convertir l'angle d'inclinaison fourni en une altitude sélectionnée Hs correspondante.

Selon un mode de mise en œuvre perfectionné, la méthode de détection selon l'invention est caractérisée en ce que la distance de mesure théorique $D_{MT}$ est déterminée pour chaque altitude donnée d'une pluralité d'altitudes données distinctes $H_{Dj}$, j = 1 à J, pouvant être sélectionnées par un utilisateur de la montre, chaque distance de mesure théorique $D_{MTj}$ et/ou chaque facteur de correction $F_{Cj}$ correspondant étant enregistré dans la mémoire 4 de la montre pour permettre la sélection d'une des distances de mesure théoriques $D_{MTj}$ ou d'un des facteurs de correction $F_{Cj}$, directement ou via la sélection d'une altitude Hs pour la limite de Karman. On remarquera que ce mode perfectionné est avantageux dans le cas d'une plage étendue pour l'altitude Hs sélectionnable pour la ligne de Karman $L_K$, par exemple entre 80 km et 110 km. Dans ce cas, la pluralité d'altitudes prédéterminées comprend par exemple la valeur 85 km pour une première partie de la plage d'altitudes sélectionnables entre 80 km et 90 km, la valeur 95 km pour une deuxième partie de la plage d'altitudes sélectionnables entre 90 km et 100 km, et la valeur 105 km pour une troisième et dernière partie de la plage d'altitudes sélectionnables entre 100 km et 110 km. La pluralité de distances de mesure théoriques $D_{MTj}$ et/ou de facteurs de

correction $F_{Cj}$ respectifs sont donc déterminés au préalable et introduits dans la mémoire 4 de la montre. Chaque facteur de correction est ainsi utilisé pour fournir une distance de référence spécifique pour seulement une partie de la plage d'altitudes sélectionnables, via une approximation linéaire basée sur une distance de mesure théorique pour une altitude donnée située sensiblement au milieu de la partie concernée de ladite plage.

On décrira encore ci-après un mode de réalisation principal de la montre selon l'invention permettant de mettre en œuvre la méthode de détection selon l'invention.

La montre 2 selon le mode de réalisation principal est caractérisée par le fait que le dispositif de détection 6 est agencé pour pouvoir mesurer périodiquement, à une fréquence de mesure $F_M$, les composantes d'un vecteur d'accélération propre de la montre selon les trois axes orthogonaux du référentiel tridimensionnel 10 défini par le capteur d'accélération 8 et lié à la montre, c'est-à-dire de mesurer un vecteur d'accélération propre au moyen du dispositif de détection dans un référentiel de la montre, ce vecteur d'accélération propre étant égal à une somme vectorielle des forces que subit cette montre, excepté la force de gravité, divisée par sa masse. On notera qu'un tel vecteur d'accélération propre peut être fourni par un capteur d'accélération formé par un microsystème électromécanique (MEMS), lequel est prévu dans une variante préférée. Ensuite, le dispositif de détection 6 est agencé pour pouvoir calculer dans l'unité électronique 12, pour chaque mesure, la norme $A_M(t_n)$ du vecteur d'accélération propre mesurée par le capteur d'accélération 8 ou une norme corrigée égale à la norme $A_M(t_n)$ moins la norme de l'accélération terrestre $A_E$, $t_n$ étant égal à $n \cdot P$ où n est un nombre de mesures effectuées au moins depuis le décollage de la fusée, incrémenté d'une unité à chaque mesure successive, et P est la période temporelle définie par la fréquence de mesure.

L'unité électronique 12 est agencée pour pouvoir encore calculer, de manière numérique, une double intégrale sur le temps, au moins depuis le décollage de la fusée, de l'accélération propre $A_P(t)$, c'est-à-dire de la norme $A_P(t)$ du vecteur d'accélération propre, de la montre et donc aussi de la fusée (on considère que la montre subit peu ou pas d'accélération de la part de son utilisateur autre que celle engendrée par la fusée sur la montre), respectivement de cette accélération propre / norme diminuée de la norme de l'accélération terrestre, l'accélération propre $A_P(t)$ étant déterminée sur la base desdites normes $A_M(t_n)$ des vecteurs d'accélération propre mesurés périodiquement, pour obtenir des distances de comparaison $D_C(t_m)$ pour des temps $t_m$, avec m un nombre entier positif, chaque m correspondant à un dit nombre n. Ensuite, le dispositif de détection 6 est agencé pour pouvoir comparer chaque distance de comparaison $D_C(t_m)$ et une valeur de référence prédéterminée, en mémoire, ou une valeur de référence calculée, obtenue pour une altitude sélectionnée Hs via un facteur de correction Fc, ces valeurs et ce facteur de correction ayant été définis précédemment dans le cadre du mode de réalisation général de la montre, et ainsi détecter si la distance de comparaison $D_C(t_m)$ est supérieure à cette valeur de référence prédéterminée ou à cette valeur de référence.

Selon une variante avantageuse, le calcul de la double intégrale sur le temps, effectuée dans l'unité électronique 12, consiste à effectuer une double intégrale par incréments en définissant, après chaque mesure de l'accélération propre, une valeur constante $A_C(t_n)$ pour la norme du vecteur d'accélération propre sur chaque période P entre les instants $t_{n-1}$ et $t_n$, cette valeur constante étant déterminée par la norme $A_M(t_n)$ ou/et la norme $A_M(t_{n-1})$, à calculer, pour chaque période P, une augmentation de vitesse correspondant à ladite valeur constante, respectivement à la valeur constante diminuée de la norme de l'accélération terrestre, pour ensuite déterminer une vitesse estimée $V_E(t_n)$ au temps $t_n$, et une distance élémentaire $d_n$ sur la base de la valeur constante $A_C(t_n)$, respectivement de cette valeur constante diminuée de la norme de l'accélération terrestre et de la vitesse estimée $V_E(t_{n-1})$ au temps $t_{n-1}$, et ensuite à ajouter la distance élémentaire $d_n$ à la somme des distances élémentaires $d_1$ à $d_{n-1}$, obtenue suite à la mesure précédente de l'accélération propre, pour obtenir une distance de comparaison $D_C(t_n)$ pour le temps $t_n$.

Dans une variante particulière, la montre comprend des moyens visuels et/ou vibratoires (un vibreur), et/ou éventuellement sonores, agencés pour pouvoir indiquer un dépassement de la ligne de Karman par la montre dès que le dispositif de détection a détecté un passage de la ligne de Karman par cette montre. Si la puissance de calcul dans la montre est suffisante pour calculer la distance de comparaison $D_C(t_n)$ directement après chaque mesure du vecteur de l'accélération propre de la montre au temps $t_n$, on a alors une détection du passage de la ligne de Karman quasi en temps réel par cette montre et donc par la fusée.

Dans une variante générale, la montre est agencée pour pouvoir enregistrer au moins un premier passage de la ligne de Karman par cette montre, de préférence chaque passage de la ligne de Karman par la montre. De plus, elle comprend des moyens d'affichage 30 agencés pour pouvoir indiquer automatiquement et/ou sur commande si la ligne de Karman a été dépassée par la montre et, de préférence, indiquer un nombre de fois que cet événement a eu lieu.

Selon une variante préférée, la montre est agencée pour pouvoir enregistrer de manière permanente dans la mémoire 4 une détection d'un passage de la ligne de Karman par cette montre, cet enregistrement étant réalisé dans une partie protégée 4a de la mémoire, de manière qu'un utilisateur de la montre ne peut pas programmer cette partie protégée.

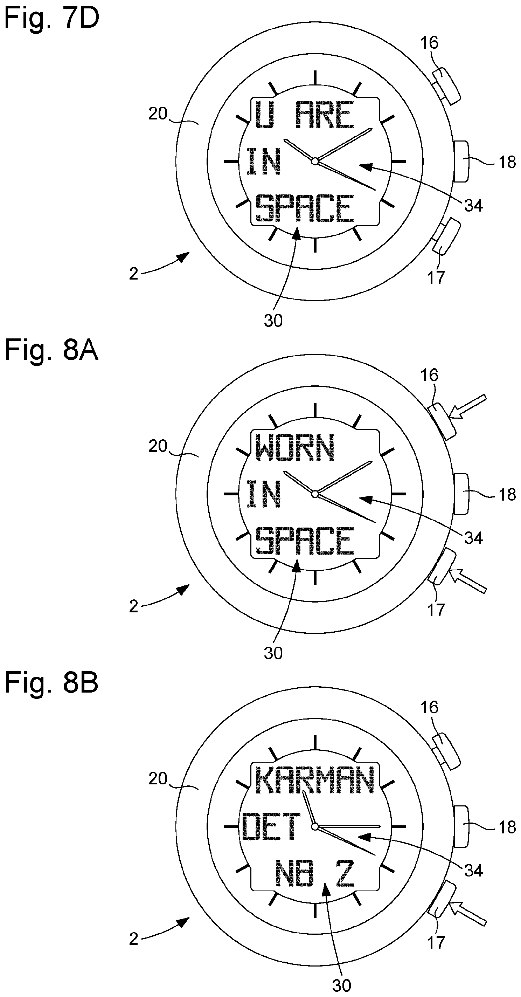

Les Figures 7A à 7D représentent divers messages donnés par la montre 2, via l'affichage digital 30, lors d'un vol spatial. En pressant longuement sur le poussoir 16, l'utilisateur installé dans la fusée active le mode de détection du passage de la ligne de Karman par la montre. La montre affiche alors 'KARMAN DET READY' (Figure 7A), c'est-à-dire que le dispositif de détection 6 est prêt pour une détection du passage de la ligne de Karman par la montre 2, respectivement par la fusée. Ensuite, le dispositif de détection est capable de déterminer, sur la base des mesures de l'accélération propre de la montre, lorsque la fusée décolle. A ce moment l'affichage digital indique 'KARMAN ON TK OFF' (Figure 7B), c'est-à-dire que le dispositif de détection est actif et que la fusée décolle. Ensuite, l'affichage digital indique le temps écoulé depuis le décollage, par exemple 125 secondes à un moment donné en affichant 'FLIGHT TM 125' (Figure 7C). Finalement, dès que la montre a détecté le passage de la ligne de Karman et donc l'entrée dans l'espace proprement dit, la montre affiche le message 'U ARE IN SPACE' (Figure 7D, 'U' étant une abréviation de 'YOU'), c'est-à-dire que l'astronaute est arrivé avec la fusée dans l'espace.

Les Figures 8A et 8B donnent un exemple de messages pouvant être affichés par la montre notamment en dehors d'au moins une mission spatiale à laquelle la montre a participé comme instrument de détection du passage de la ligne de Karman pour l'astronaute qui la porte. En pressant simultanément sur les deux poussoirs 16 et 17, la montre affiche sur la base de données enregistrées dans sa mémoire, de préférence dans la partie protégée 4a formée par une mémoire non volatile pouvant être écrite une seule fois (mémoire 'OTP', acronyme de l'expression anglaise 'One-Time-Programmable'), le message 'WORN IN SPACE' (Figure 8A), c'est-à-dire que la montre a été portée dans l'espace et a donc dépassé la ligne de Karman. De préférence, par une pression ultérieure sur le poussoir 17, la montre indique ensuite un nombre de fois que la montre est entrée dans l'espace par le message 'KARMAN DET NB' et ledit nombre (soit 2 dans l'exemple donné à la Figure 8B).

On a décrit précédemment que la montre peut être agencée pour permettre l'introduction de divers paramètres et/ou variables sélectionnables, notamment une altitude pour la limite de Karman ou un angle d'inclinaison de la fusée prévu au moment de cet événement. L'introduction de ces données peut se faire notamment via un écran tactile formé au niveau du verre de la montre ou/et via un défilement de nombres croissant sur une partie de l'affichage digital 30 et un bouton poussoir permettant de stopper le défilement sur la valeur prévue ou d'effectuer un tel défilement. On peut alternativement utiliser à cet effet les aiguilles de l'affichage analogique 34.

On remarquera que la distance de mesure théorique $D_{MT}$, définissant une valeur de référence prédéterminée, et le facteur de correction Fc correspondant qui permet de déterminer une valeur de référence calculée, concernent un type donné de fusée (aussi nommé 'type de lanceur') comme indiqué précédemment. Dans un mode de réalisation perfectionné, il est prévu d'introduire les distances de mesure théorique $D_{MT}$ ou/et les coefficients de correction correspondants dans la mémoire 4 de la montre pour plusieurs types de fusée. Dans ce cas, la montre comprend des moyens permettant de sélectionner, avant un vol spatial, quel est le type de fusée concerné par la détection prévue du passage de la ligne de Karman. Ces moyens de sélection peuvent notamment utiliser une liste donnant les divers types de fusée qui ont été envisagés pour l'application de détection dans la montre, cette liste pouvant être consultée via un défilement des divers types de fusée prévus aux moyens d'un organe de commande de la montre et d'une sélection effectuée via un autre organe de commande.

Finalement, on notera que chaque distance de mesure théorique $D_{MT}$ et chaque facteur de correction Fc correspondant est relative à une altitude donnée $H_D$. Cette altitude donnée peut être soit une altitude mesurée depuis le niveau de la mer, c'est-à-dire indépendante du lieu de lancement de la fusée, soit une altitude mesurée depuis un lieu de lancement spécifique.

Dans une variante sophistiquée, on peut prévoir que le lieu de lancement puisse aussi être sélectionné par un utilisateur avant un vol spatial via les organes de commande et les moyens d'affichage de la montre. A chaque lieu de lancement correspond / correspondent alors une ou plusieurs distances de mesure théorique et un ou plusieurs facteurs de correction correspondants. Dans ce cas, une altitude sélectionnée Hs par un utilisateur sera une altitude depuis le niveau de la mer. On comprend qu'il est avantageux, car plus simple tout en restant précis, d'utiliser des altitudes mesurées depuis un lieu de lancement quelconque, c'est-à-dire des hauteurs mesurées depuis le sol au point de départ de la fusée, ceci aussi bien pour les altitudes données $H_D$, qui servent à déterminer au préalable une ou plusieurs valeurs de référence, que pour les altitudes Hs sélectionnées par un utilisateur.

## Revendications

1. Méthode de détection du passage de la ligne de Karman $L_K$, définie par une altitude donnée $H_D$ ou sélectionnée Hs, par une fusée d'un type donné, lors d'un vol spatial de cette fusée, au moyen d'un objet portable par un utilisateur et embarqué dans la fusée, cet objet portable comprenant une mémoire, une base de temps et un dispositif de détection, ce dispositif de détection étant formé par un capteur d'accélération, pouvant mesurer un vecteur d'accélération propre de l'objet portable dans un référentiel tridimensionnel de cet objet portable, et par une unité électronique agencée pour pouvoir traiter des mesures fournies par le capteur d'accélération, le vecteur d'accélération propre de l'objet portable étant égal à la somme vectorielle des forces que subit cet objet portable, excepté la force de gravité, divisée par sa masse ; la méthode de détection comprenant une phase préliminaire, laquelle est préliminaire à l'embarquement de l'objet portable dans la fusée pour ledit vol spatial, comprenant les étapes préliminaires suivantes :

   - fournir une accélération de mouvement nominale $A_N(t)$ pour la fusée du type donné, en fonction du temps t, depuis un décollage de cette fusée, définissant un temps zéro, au moins jusqu'à un passage par ladite altitude donnée $H_D$, cette accélération de mouvement nominale étant une valeur scalaire dans une unité égale à l'attraction terrestre ;

- fournir un angle d'inclinaison théorique $\theta_T(t)$ pour la fusée du type donné, relativement à un plan horizontal et en fonction du temps t, depuis le décollage de cette fusée jusqu'à au moins un passage par l'altitude donnée $H_D$ ;

- déterminer ou fournir une durée de vol théorique $T_K$ pour la fusée du type donné entre le décollage de cette fusée jusqu'au passage par l'altitude donnée $H_D$ ;

- sur la base de ladite accélération de mouvement nominale et dudit angle d'inclinaison théorique, déterminer une accélération propre théorique $A_{PT}$ (t), en fonction du temps, pour la fusée du type donné, la valeur de cette accélération propre théorique étant définie, dans une unité égale à l'attraction terrestre, par la formule suivante :

$$A_{PT}(t) = \sqrt{1 + 2 \cdot A_N(t) \cdot \sin\theta_T(t) + A_N^2(t)}$$

- calculer, par des moyens numériques et/ou mathématiques, une distance de mesure théorique $D_{MT}$ définie par une double intégration de l'accélération propre théorique $A_{PT}$ (t), entre le temps zéro (t = 0) correspondant au décollage de la fusée et le temps $T_K$ correspondant à la durée de vol théorique, ou de cette accélération propre théorique diminuée de la norme de l'accélération terrestre ; la distance de mesure théorique $D_{MT}$ divisée par l'altitude donnée $H_D$ pour la ligne de Karman $L_K$ définissant, pour la fusée du type donné, un facteur de correction $F_C$ ;

- enregistrer la distance de mesure théorique $D_{MT}$ et/ou le facteur de correction Fc dans la mémoire de l'objet portable, ce facteur de correction Fc étant ensuite, avant un décollage de la fusée définissant un début dudit vol spatial, multiplié dans l'unité électronique par l'altitude sélectionnée Hs, le cas échéant, de sorte à obtenir une distance de référence $D_{MR}$ ;

- avant le décollage de ladite fusée, activer le dispositif de détection de l'objet portable embarqué dans cette fusée ;

la méthode de détection comprenant ensuite une phase de détection comprenant les étapes de détection suivantes :

- mesurer périodiquement, à une fréquence de mesure $F_M$, le vecteur d'accélération propre de l'objet portable au moyen du dispositif de détection, et calculer dans l'unité électronique, pour chaque mesure, la norme $A_M(t_n)$ de ce vecteur d'accélération propre mesuré, respectivement une norme corrigée égale à la norme $A_M(t_n)$ diminuée de la norme de l'accélération terrestre, $t_n$ étant un temps égal à $n \cdot P$ où n est un nombre de mesures effectuées au moins depuis le décollage de la fusée, incrémenté d'une unité à chaque nouvelle mesure, et P est la période temporelle définie par ladite fréquence de mesure ;

- calculer de manière numérique, dans l'unité électronique, une double intégrale sur le temps, depuis le décollage de la fusée, respectivement au moins depuis le décollage de la fusée, de la norme du vecteur d'accélération propre de l'objet portable, respectivement de cette norme diminuée de la norme de l'accélération terrestre, la norme du vecteur d'accélération propre étant déterminée sur la base desdites normes $A_M(t_n)$ des vecteurs d'accélération propre mesurés périodiquement, pour obtenir des distances de comparaison $D_C(t_m)$ pour des temps $t_m$, avec m un nombre entier positif, chaque m correspondant à un dit nombre n ;

- comparer chaque distance de comparaison $D_C(t_m)$ avec la distance de mesure théorique $D_{MT}$ dans le cas d'une altitude donnée $H_D$, respectivement avec la distance de référence $D_{MR}$ dans le cas d'une altitude sélectionnée Hs et, lorsqu'une distance de comparaison $D_C(t_m)$ est supérieure à la distance de mesure théorique $D_{MT}$, respectivement à la distance de référence $D_{MR}$, enregistrer dans la mémoire de l'objet portable une détection, par le dispositif de détection, du passage de la ligne de Karman par cet objet portable.

2. Méthode de détection selon la revendication 1, **caractérisée en ce que** l'étape de calcul, dans l'unité électronique, de la double intégrale sur le temps de la norme du vecteur d'accélération propre de l'objet portable, respectivement de cette norme diminuée de la norme de l'accélération terrestre consiste à effectuer une double intégrale par incréments en définissant, après chaque mesure du vecteur d'accélération propre, une valeur constante $A_C(t_n)$ pour la norme du vecteur d'accélération propre sur chaque période P entre les instants $t_{n-1}$ et $t_n$, cette valeur constante étant déterminée par la norme $A_M(t_n)$ ou/et la norme $A_M(t_{n-1})$, à calculer, pour chaque période P, une augmentation de vitesse correspondant à ladite valeur constante, respectivement à la valeur constante diminuée de la norme de l'accélération terrestre, pour ensuite déterminer une vitesse estimée $V_E(t_n)$ au temps $t_n$, et une distance élémentaire $d_n$ sur la base de la valeur constante $A_C(t_n)$, respectivement de cette valeur constante diminuée de la norme de l'accélération terrestre et de la vitesse estimée $V_E(t_{n-1})$ au temps $t_{n-1}$, et ensuite à ajouter la distance élémentaire $d_n$ à la somme des

distances élémentaires $d_1$ à $d_{n-1}$, obtenue suite à la mesure précédente du vecteur d'accélération propre, pour obtenir une distance de comparaison $D_C(t_n)$ pour le temps $t_n$.

3. Méthode de détection selon la revendication 1 ou 2, **caractérisée en ce que** ladite durée de vol théorique $T_K$ est déterminée, sur la base de l'accélération de mouvement nominale et de l'angle d'inclinaison théorique, dans la phase préliminaire par la résolution mathématique et/ou numérique de l'équation suivante, avec $H_D$ ladite altitude donnée et le temps T comme variable :

$$H_D = H_{FT}(T) = \int_0^T V_N(t) \cdot \sin \theta_T(t) \cdot dt \,, \text{ avec } V_N(t) = \int_0^t A_N(t) \cdot dt$$

4. Méthode de détection selon une quelconque des revendications 1 à 3, **caractérisée en ce que** ladite altitude sélectionnée Hs est déterminée en fonction d'un angle d'inclinaison de ladite fusée qui est sélectionné pour le passage de la ligne de Karman par cette fusée et fourni à l'objet portable avant un vol spatial avec la fusée.

5. Méthode de détection selon une quelconque des revendications 1 à 4, **caractérisée en ce que** la distance de mesure théorique est déterminée pour chaque altitude donnée d'une pluralité d'altitudes données distinctes $H_{Dj}$, j = 1 à J, pouvant être sélectionnées, chaque distance de mesure théorique $D_{MTj}$ et/ou chaque facteur de correction $F_{Cj}$ correspondant étant enregistré dans la mémoire de l'objet portable pour permettre la sélection d'une des distances de mesure théoriques $D_{MTj}$ ou d'un des facteurs de correction $F_{Cj}$, directement ou via la sélection d'une altitude pour la limite de Karman.

6. Méthode de détection selon une quelconque des revendications 1 à 5, **caractérisée en ce que** le capteur d'accélération est formé par un microsystème électromécanique (MEMS).

7. Objet portable (2) par un utilisateur comprenant une mémoire (4), une base de temps et un dispositif de détection (6) formé par un capteur d'accélération (8), capable de mesurer un vecteur d'accélération de l'objet portable dans un référentiel tridimensionnel (10) lié à cet objet portable, et par une unité électronique (12) agencée pour pouvoir traiter des mesures fournies par le capteur d'accélération ; **caractérisé en ce que** le dispositif de détection (6) est agencé pour pouvoir détecter de manière autonome, lors d'un vol spatial d'une fusée d'un type donné, un passage de la ligne de Karman $L_K$ par l'objet portable embarqué dans cette fusée, la ligne de Karman $L_K$ étant définie par une altitude donnée $H_D$ ou une altitude Hs sélectionnable par l'utilisateur, directement ou via une sélection d'une autre variable spatiale ; **en ce qu'**une détection d'un passage de la ligne de Karman par l'objet portable peut être effectuée par l'unité électronique (12) sur la base de mesures périodiques du vecteur d'accélération de l'objet portable, effectuées par le capteur d'accélération depuis un décollage de la fusée jusqu'au passage de la ligne de Karman $L_K$, et soit d'une valeur de référence prédéterminée qui est stockée préalablement audit décollage dans la mémoire (4), soit d'une valeur de référence calculée dans l'unité électronique (12) et déterminée par un facteur de correction Fc, prédéterminé et stocké préalablement audit décollage dans la mémoire, et une altitude Hs sélectionnée pour la ligne de Karman préalablement audit décollage par l'utilisateur, la valeur de référence prédéterminée et le facteur de correction Fc étant relatifs à ladite altitude donnée $H_D$ ; et **en ce que** l'unité électronique est agencée pour pouvoir calculer une évolution temporelle d'une distance de comparaison sur la base desdites mesures périodiques du vecteur d'accélération de l'objet portable et comparer au cours du temps cette distance de comparaison avec la valeur de référence prédéterminée, respectivement ladite valeur de référence calculée pour ainsi pouvoir détecter un passage de la ligne de Karman par l'objet portable.

8. Objet portable (2) selon la revendication 7, **caractérisé en ce que** le dispositif de détection (6) est agencé de manière que la distance de comparaison est calculée sur la base des normes des vecteurs d'accélération mesurés par le capteur d'accélération (8) dans ledit référentiel tridimensionnel (10), l'unité électronique (12) étant agencée pour pouvoir calculer ces normes.

9. Objet portable selon la revendication 7 ou 8, **caractérisé en ce que** ledit facteur de correction Fc est égal à ladite valeur de référence prédéterminée divisée par ladite altitude donnée $H_D$.

10. Objet portable selon une quelconque des revendications 7 à 9, **caractérisé en ce que** ladite valeur de référence prédéterminée est définie sur la base d'au moins une fonction théorique d'une variable spatiale relative à ladite fusée, depuis un décollage de cette fusée jusqu'à ladite altitude donnée $H_D$ pour la ligne de Karman $L_K$.

11. Objet portable (2) selon la revendication 7 ou 8, **caractérisé en ce que** la mémoire (4) peut contenir une pluralité de valeurs de référence prédéterminées qui sont respectivement relatives à une pluralité d'altitudes données $H_{Dj}$, j = 1 à J, chacune des valeurs de référence prédéterminée étant définie sur la base d'au moins une fonction théorique d'une variable spatiale relative à ladite fusée, depuis un décollage de cette fusée jusqu'à l'altitude donnée correspondante, chacune des altitudes données pouvant être sélectionnée, par un utilisateur, pour permettre une comparaison au cours du temps de ladite distance de comparaison, calculée lors d'une détection du passage de la ligne de Karman par l'objet portable, avec la valeur de référence prédéterminée correspondante.

12. Objet portable (2) selon une quelconque des revendications 7 à 10, **caractérisé en ce que** la mémoire (4) peut contenir une pluralité de facteurs de correction respectivement relatifs à une pluralité d'altitudes données $H_{Dj}$, j = 1 à J, chacun des facteurs de correction pouvant être sélectionné en fonction d'une altitude sélectionnée, par un utilisateur, pour la ligne de Karman $L_K$ pour permettre une comparaison au cours du temps de ladite distance de comparaison, calculée lors d'une détection du passage de la ligne de Karman par l'objet portable, avec une valeur de référence déterminée par le facteur de correction sélectionné et l'altitude sélectionnée.

13. Objet portable selon la revendication 12, **caractérisé en ce qu'**une pluralité de valeurs de référence prédéterminées sont respectivement définies pour la pluralité d'altitudes données $H_{Dj}$, chacune des valeurs de référence prédéterminée étant définie sur la base d'au moins une fonction théorique d'une variable spatiale relative à ladite fusée, depuis un décollage de cette fusée jusqu'à l'altitude donnée correspondante ; et **en ce que** lesdits facteurs de correction sont respectivement égaux à auxdites valeurs de référence prédéterminées respectivement divisées par lesdites altitudes données.

14. Objet portable (2) selon une quelconque des revendications 7 à 9 et 11, **caractérisé en ce que** le capteur d'accélération (8) est formé par un microsystème électromécanique (MEMS).

15. Objet portable (2) selon la revendication 10, **caractérisé en ce que** le capteur d'accélération (8) est formé par un microsystème électromécanique (MEMS) ; et **en ce que** ladite valeur de référence prédéterminée est en outre définie sur la base d'une accélération de mouvement nominale $A_N(t)$ pour la fusée.

16. Objet portable selon la revendication 12 ou 13, **caractérisé en ce que** le capteur d'accélération est formé par un microsystème électromécanique (MEMS) ; et **en ce que** chaque valeur de référence prédéterminée est en outre définie sur la base d'une accélération de mouvement nominale $A_N(t)$ pour la fusée.

17. Objet portable (2) selon une quelconque des revendications 14 à 16, **caractérisé en ce que** le dispositif de détection (6) est agencé pour pouvoir mesurer périodiquement, à une fréquence de mesure $F_M$, un vecteur d'accélération propre de l'objet portable (2) dans ledit référentiel tridimensionnel (10) au moyen du capteur d'accélération (8), ce vecteur d'accélération propre étant égal à la somme vectorielle des forces que subit l'objet portable, excepté la force de gravité, divisée par sa masse, et calculer dans l'unité électronique (12), pour chaque mesure, la norme $A_M(t_n)$ de ce vecteur d'accélération propre mesuré, respectivement une norme corrigée égale à la norme $A_M(t_n)$ diminuée de la norme de l'accélération terrestre, $t_n$ étant égal à n·P où n est un nombre de mesures effectuées au moins depuis le décollage de la fusée, incrémenté d'une unité à chaque mesure successive, et P est la période temporelle définie par la fréquence de mesure ; **en ce que** l'unité électronique (12) est agencée pour pouvoir calculer de manière numérique une double intégrale sur le temps, au moins depuis le décollage de la fusée, de la norme du vecteur d'accélération propre de l'objet portable, respectivement de cette norme diminuée de la norme de l'accélération terrestre, la norme du vecteur d'accélération propre étant déterminée sur la base desdites normes $A_M(t_n)$ des vecteurs d'accélération propre mesurés périodiquement, pour obtenir des distances de comparaison $D_C(t_m)$ pour des temps $t_m$, avec m un nombre entier positif, chaque m correspondant à un dit nombre n ; et **en ce que** le dispositif de détection (6) est agencé pour pouvoir comparer chaque distance de comparaison $D_C(t_m)$ et une dite valeur de référence prédéterminée, en mémoire, ou une dite valeur de référence, obtenue pour une altitude sélectionnée Hs via un dit facteur de correction, et ainsi détecter si la distance de comparaison $D_C(t_m)$ est supérieure à cette valeur de référence prédéterminée ou cette valeur de référence.

18. Objet portable selon la revendication 17, **caractérisé en ce que** le calcul de ladite double intégrale sur le temps dans l'unité électronique consiste à effectuer une double intégrale par incréments en définissant, après chaque mesure du vecteur d'accélération propre, une valeur constante $A_C(t_n)$ pour la norme du vecteur d'accélération propre sur chaque période P entre les instants $t_{n-1}$ et $t_n$, cette valeur constante étant déterminée par la norme $A_M(t_n)$ ou/et la norme $A_M(t_{n-1})$, à calculer, pour chaque période P, une augmentation de vitesse correspondant à ladite valeur constante, respectivement à la valeur constante diminuée de la norme de l'accélération terrestre, pour ensuite déterminer une vitesse estimée $V_E(t_n)$ au temps $t_n$, et une distance élémentaire $d_n$ sur la base de la valeur constante $A_C(t_n)$,

respectivement de cette valeur constante diminuée de la norme de l'accélération terrestre et de la vitesse estimée $V_E$ ($t_{n-1}$) au temps $t_{n-1}$, et ensuite à ajouter la distance élémentaire $d_n$ à la somme des distances élémentaires $d_1$ à $d_{n-1}$, obtenue suite à la mesure précédente du vecteur d'accélération propre, pour obtenir une distance de comparaison $D_C$ ($t_n$) pour le temps $t_n$.

**19.** Objet portable selon une quelconque des revendications 7 à 18, **caractérisé en ce qu'**il comprend des moyens visuels et/ou vibratoires, et/ou sonores, agencés pour pouvoir indiquer un dépassement de la ligne de Karman par l'objet portable dès que le dispositif de détection a détecté un passage de la ligne de Karman par l'objet portable.

**20.** Objet portable (2) selon une quelconque des revendications 7 à 19, **caractérisé en ce qu'**il est agencé pour enregistrer au moins un premier passage de la ligne de Karman par cet objet portable, de préférence chaque passage de la ligne de Karman par l'objet portable ; et **en ce qu'**il comprend des moyens d'affichage (34) agencés pour pouvoir indiquer automatiquement et/ou sur commande si la ligne de Karman a été dépassée par l'objet portable, de préférence indiquer un nombre de fois que cet événement a eu lieu.

**21.** Objet portable (2) selon la revendication 20, **caractérisé en ce qu'**il est agencé pour pouvoir enregistrer de manière permanente dans la mémoire une détection d'un passage de la ligne de Karman par cet objet portable, de préférence de chaque détection, cet enregistrement étant réalisé dans une partie protégée (4a) de la mémoire, de manière qu'un utilisateur de l'objet portable ne peut pas programmer la partie protégée.

**22.** Objet portable (2) selon une quelconque des revendications 7 à 21, **caractérisé en ce que** cet objet portable est une montre, en particulier une montre bracelet.

**Patentansprüche**

**1.** Verfahren zur Erkennung des Durchgangs der Kármán-Linie $L_K$, definiert durch eine vorgegebene Höhe $H_D$ oder eine ausgewählte Höhe Hs, durch eine Rakete eines bestimmten Typs während eines Raumfluges dieser Rakete, mittels eines von einem Benutzer getragenen und in der Rakete mitgeführten tragbaren Objekts, wobei dieses tragbare Objekt einen Speicher, eine Zeitbasis und eine Erkennungsvorrichtung umfasst, **dadurch gekennzeichnet, dass** die Erkennungsvorrichtung durch einen Beschleunigungssensor gebildet ist, der in der Lage ist, einen Eigenbeschleunigungsvektor des tragbaren Objekts in einem dreidimensionalen Bezugssystem dieses tragbaren Objekts zu messen, und durch eine elektronische Einheit, die eingerichtet ist, die vom Beschleunigungssensor gelieferten Messwerte zu verarbeiten, wobei der Eigenbeschleunigungsvektor des tragbaren Objekts der Vektorsumme der auf dieses tragbare Objekt einwirkenden Kräfte mit Ausnahme der Schwerkraft, dividiert durch dessen Masse, entspricht; wobei das Erkennungsverfahren eine Vorphase umfasst, die dem Mitführen des tragbaren Objekts in der Rakete zu dem genannten Raumflug vorausgeht und folgende vorbereitende Schritte umfasst:

- Bereitstellen einer nominalen Bewegungsbeschleunigung $A_N(t)$ für die Rakete des genannten Typs in Abhängigkeit von der Zeit t, beginnend mit dem Start dieser Rakete, der die Zeit null definiert, zumindest bis zum Durchgang durch die genannte Höhe $H_D$, wobei diese nominale Bewegungsbeschleunigung einen Skalarwert in einer Einheit darstellt, die der Erdanziehung entspricht;
- Bereitstellen eines theoretischen Neigungswinkels θT(t) für die Rakete des genannten Typs relativ zu einer Horizontalebene und in Abhängigkeit von der Zeit t, vom Start dieser Rakete bis zumindest zum Durchgang durch die angegebene Höhe $H_D$;
- Bestimmen oder Bereitstellen einer theoretischen Flugdauer $T_K$ für die Rakete des genannten Typs zwischen dem Start dieser Rakete und dem Durchgang durch die angegebene Höhe $H_D$;
- auf der Grundlage der genannten nominalen Bewegungsbeschleunigung und des genannten theoretischen Neigungswinkels eine theoretische Eigenbeschleunigung $A_{PT}(t)$, für die Rakete des genannten Typs in Abhängigkeit von der Zeit bestimmen, wobei der Wert dieser theoretischen Eigenbeschleunigung in einer Einheit, die der Erdanziehung entspricht, durch die folgende Formel definiert ist:

$$A_{PT}(t) = \sqrt{1 + 2 \cdot A_N(t) \cdot \sin \theta_T(t) + A_N{}^2(t)}$$

- Berechnen, mittels numerischer und/oder mathematischer Verfahren, einer theoretischen Messdistanz $D_{MT}$, die durch eine doppelte Integration der theoretischen Eigenbeschleunigung $A_{PT}(t)$ zwischen der Zeit null (t = 0), die dem Start der Rakete entspricht, und der Zeit $T_K$, die der theoretischen Flugdauer entspricht, oder der genannten theoretischen Eigenbeschleunigung vermindert um den Betrag der Erdbeschleunigung definiert ist; wobei die theoretische Messdistanz $D_{MT}$, dividiert durch die für die Kármán-Linie $L_K$ angegebene Höhe $H_D$, für die Rakete des genannten Typs einen Korrekturfaktor Fc definiert;

- Speichern der theoretischen Messdistanz $D_{MT}$ und/oder des Korrekturfaktors $F_C$ im Speicher des tragbaren Objekts, wobei der Korrekturfaktor $F_C$ anschließend, vor einem Start der Rakete, der den Beginn des genannten Raumfluges definiert, in der elektronischen Einheit gegebenenfalls mit der ausgewählten Höhe Hs multipliziert wird, um eine Referenzdistanz $D_{MR}$ zu erhalten;

- vor dem Start der genannten Rakete die Erkennungsvorrichtung des in der Rakete mitgeführten tragbaren Objekts aktivieren;

wobei das Erkennungsverfahren anschließend eine Detektionsphase umfasst, die die folgenden Detektionsschritte umfasst:

- periodisches Messen, mit einer Messfrequenz $F_M$, des Eigenbeschleunigungsvektors des tragbaren Objekts mittels der

Erkennungsvorrichtung, und Berechnen in der elektronischen Einheit für jede Messung der Norm Am($t_n$) dieses gemessenen Eigenbeschleunigungsvektors beziehungsweise einer korrigierten Norm, die gleich der Norm $A_M(t_n)$ vermindert um die Norm der Erdbeschleunigung ist, wobei tn einer Zeit entspricht, die gleich n·P ist, wobei n eine Anzahl der seit dem Start der Rakete durchgeführten Messungen darstellt, die bei jeder neuen Messung um eine Einheit erhöht wird, und P die durch die genannte Messfrequenz definierte Zeitperiode ist;

- numerisches Berechnen, in der elektronischen Einheit, einer doppelten Zeitintegration der Norm des Eigenbeschleunigungsvektors des tragbaren Objekts, jeweils seit dem Start der Rakete, beziehungsweise dieser Norm vermindert um den Betrag der Erdbeschleunigung, wobei die Norm des Eigenbeschleunigungsvektors auf Grundlage der genannten Normen $A_M(t_n)$ der periodisch gemessenen Eigenbeschleunigungs-vektoren bestimmt wird, um Vergleichsdistanzen $D_C(t_m)$ für Zeiten $t_m$ zu erhalten, wobei m eine positive ganze Zahl ist und jedes m einer genannten Zahl n entspricht;

- Vergleichen jeder Vergleichsdistanz $D_C(t_m)$ mit der theoretischen Messdistanz $D_{MT}$ im Fall einer vorgegebenen Höhe $H_D$ beziehungsweise mit der Referenzdistanz $D_{MR}$ im Fall einer ausgewählten Höhe Hs, und, wenn eine Vergleichsdistanz $D_C(t_m)$ größer ist als die theoretische Messdistanz $D_{MT}$ beziehungsweise die Referenzdistanz $D_{MR}$, Speichern, im Speicher des tragbaren Objekts, einer durch die Erkennungsvorrichtung erfolgenden Detektion des Durchgangs der Kármán-Linie durch dieses tragbare Objekt.

2. Erkennungsverfahren nach Anspruch 1, **dadurch gekennzeichnet, dass** der Schritt des Berechnens der doppelten Zeitintegration in der elektronischen Einheit der Norm des Eigenbeschleunigungsvektors des tragbaren Objekts, beziehungsweise dieser Norm vermindert um den Betrag der Erdbeschleunigung, darin besteht, eine doppelte Integration schrittweise durchzuführen, indem nach jeder Messung des Eigenbeschleunigungsvektors ein konstan-ter Wert $A_C(t_n)$ für die Norm des Eigenbeschleunigungsvektors über jede Periode P zwischen den Zeitpunkten tn-1 und tn definiert wird, wobei dieser konstante Wert durch die Norm $A_M(t_n)$ und/oder die Norm $A_M(t_{n-1})$ bestimmt wird, wobei für jede Periode P ein Geschwindigkeitszuwachs berechnet wird, der dem genannten konstanten Wert beziehungsweise dem genannten konstanten Wert vermindert um den Betrag der Erdbeschleunigung entspricht, um anschließend eine geschätzte Geschwindigkeit $V_E(t_n)$ zum Zeitpunkt tn sowie eine Elementardistanz dn auf der Grundlage des konstanten Werts $A_C(t_n)$, beziehungsweise dieses konstanten Werts vermindert um den Betrag der Erdbeschleunigung und um die geschätzte Geschwindigkeit $V_E(t_{n-1})$ zum Zeitpunkt $t_{n-1}$, zu bestimmen, und an-schließend die Elementardistanz dn zu der Summe der aus der vorherigen Messung des Eigenbeschleunigungsvektors erhaltenen Elementardistanzen d1 bis dn-1 zu addieren, um eine Vergleichsdistanz $D_C(t_n)$ für die Zeit tn zu erhalten.

3. Erkennungsverfahren nach Anspruch 1 oder 2, **dadurch gekennzeichnet, dass** die genannte theoretische Flugdauer $T_K$ auf der Grundlage der nominalen Bewegungsbeschleunigung und des theoretischen Neigungswinkels in der Vorphase durch die mathematische und/oder numerische Lösung der folgenden Gleichung bestimmt wird, wobei $H_D$ die genannte vorgegebene Höhe und T die Zeitvariable ist:

$$H_D = H_{FT}(T) = \int_0^T V_N(t) \cdot \sin \theta_T(t) \cdot dt \text{ , avec } V_N(t) = \int_0^t A_N(t) \cdot dt$$

4. Erkennungsverfahren nach einem der Ansprüche 1 bis 3, **dadurch gekennzeichnet, dass** die genannte ausgewählte Höhe Hs in Abhängigkeit von einem Neigungswinkel der genannten Rakete bestimmt wird, der für den Durchgang der Rakete durch die Kármán-Linie ausgewählt ist und dem tragbaren Objekt vor einem Raumflug mit der Rakete bereitgestellt wird.

5. Erkennungsverfahren nach einem der Ansprüche 1 bis 4, **dadurch gekennzeichnet, dass** die theoretische Messdistanz für jede vorgegebene Höhe einer Vielzahl unterschiedlicher vorgegebener Höhen $H_{Dj}$, j = 1 bis J, bestimmbar ist, wobei jede theoretische Messdistanz $D_{MTj}$ und/oder jeder entsprechende Korrekturfaktor $F_{cj}$ im Speicher des tragbaren Objekts gespeichert ist, um die Auswahl einer der theoretischen Messdistanzen $D_{MTj}$ oder eines der Korrekturfaktoren Fcj zu ermöglichen, direkt oder über die Auswahl einer Höhe für die Kármán-Linie.

6. Erkennungsverfahren nach einem der Ansprüche 1 bis 5, **dadurch gekennzeichnet, dass** der Beschleunigungssensor durch ein mikroelektromechanisches System (MEMS) gebildet ist.

7. Tragbares Objekt (2) für einen Benutzer, umfassend einen Speicher (4), eine Zeitbasis und eine Erkennungsvorrichtung (6), die durch einen Beschleunigungssensor (8) gebildet ist, der in der Lage ist, einen Beschleunigungsvektor des tragbaren Objekts in einem mit diesem tragbaren Objekt verbundenen dreidimensionalen Bezugssystem (10) zu messen, sowie eine elektronische Einheit (12), die eingerichtet ist, Messungen des Beschleunigungssensors verarbeiten zu können; **dadurch gekennzeichnet, dass** die Erkennungsvorrichtung (6) so ausgebildet ist, dass sie während eines Raumfluges einer Rakete eines bestimmten Typs autonom ein Durchqueren der Kármán-Linie $L_K$ durch das in dieser Rakete mitgeführte tragbare Objekt detektieren kann, wobei die Kármán-Linie $L_K$ durch eine vorgegebene Höhe $H_D$ oder eine vom Benutzer wählbare Höhe Hs definiert ist, direkt oder über die Auswahl einer anderen Raumvariablen; und dass eine Detektion eines Durchgangs der Kármán-Linie durch das tragbare Objekt von der elektronischen Einheit (12) auf Grundlage periodischer Messungen des Beschleunigungsvektors des tragbaren Objekts, ausgeführt durch den Beschleunigungssensor vom Start der Rakete bis zum Durchgang durch die Kármán-Linie $L_K$, erfolgen kann, und zwar entweder anhand eines vorbestimmten Referenzwerts, der vor dem genannten Start im Speicher (4) abgelegt ist, oder anhand eines in der elektronischen Einheit (12) berechneten Referenzwerts, der durch einen vorbestimmten und vor dem Start im Speicher abgelegten Korrekturfaktor Fc sowie eine vom Benutzer vor dem Start für die Kármán-Linie ausgewählte Höhe Hs bestimmt ist, wobei der vorbestimmte Referenzwert und der Korrekturfaktor Fc auf die genannte Höhe $H_D$ bezogen sind; und dass die elektronische Einheit (12) eingerichtet ist, eine zeitliche Entwicklung einer Vergleichsdistanz auf der Grundlage der genannten periodischen Messungen des Beschleunigungsvektors des tragbaren Objekts zu berechnen und diese Vergleichsdistanz im Zeitverlauf mit dem vorbestimmten Referenzwert beziehungsweise dem berechneten Referenzwert zu vergleichen, um so einen Durchgang der Kármán-Linie durch das tragbare Objekt detektieren zu können.

8. Tragbares Objekt (2) nach Anspruch 7, **dadurch gekennzeichnet, dass** die Erkennungsvorrichtung (6) so eingerichtet ist, dass die Vergleichsdistanz auf der Grundlage der Normen der vom Beschleunigungssensor (8) in dem genannten dreidimensionalen Bezugssystem (10) gemessenen Beschleunigungsvektoren berechnet wird, wobei die elektronische Einheit (12) eingerichtet ist, diese Normen berechnen zu können.

9. Tragbares Objekt nach Anspruch 7 oder 8, **dadurch gekennzeichnet, dass** der genannte Korrekturfaktor Fc gleich dem genannten vorbestimmten Referenzwert dividiert durch die genannte vorgegebene Höhe $H_D$ ist.

10. Tragbares Objekt nach einem der Ansprüche 7 bis 9, **dadurch gekennzeichnet, dass** der genannte vorbestimmte Referenzwert auf der Grundlage mindestens einer theoretischen Funktion einer räumlichen Variablen in Bezug auf die genannte Rakete, vom Start dieser Rakete bis zu der genannten Höhe $H_D$ für die Kármán-Linie $L_K$, festgelegt ist.

11. Tragbares Objekt (2) nach Anspruch 7 oder 8, **dadurch gekennzeichnet, dass** der Speicher (4) eine Vielzahl von vorbestimmten Referenzwerten enthalten kann, die jeweils einer Vielzahl von Höhen zugeordnet sind, wobei $H_{Dj}$, j = 1 bis J, unterschiedliche vorgegebene Höhen darstellen, wobei jeder der vorbestimmten Referenzwerte auf der Grundlage mindestens einer theoretischen Funktion einer räumlichen Variablen in Bezug auf die genannte Rakete vom Start dieser Rakete bis zur jeweiligen vorgegebenen Höhe definiert ist, wobei jede der genannten Höhen durch einen Benutzer ausgewählt werden kann, um einen Vergleich im Zeitverlauf der genannten Vergleichsdistanz, die bei der Detektion des Durchgangs der Kármán-Linie durch das tragbare Objekt berechnet wird, mit dem entsprechenden vorbestimmten Referenzwert zu ermöglichen.

12. Tragbares Objekt (2) nach einem der Ansprüche 7 bis 10, **dadurch gekennzeichnet, dass** der Speicher (4) eine Vielzahl von Korrekturfaktoren enthalten kann, die jeweils einer Vielzahl von vorgegebenen Höhen $H_{Dj}$, j = 1 bis J, zugeordnet sind, wobei jeder Korrekturfaktor in Abhängigkeit von einer vom Benutzer ausgewählten Höhe für die Kármán-Linie $L_K$ ausgewählt werden kann, um einen Vergleich im Zeitverlauf der genannten Vergleichsdistanz, die bei der Detektion des Durchgangs der Kármán-Linie durch das tragbare Objekt berechnet wird, mit einem Referenzwert zu ermöglichen, der durch den ausgewählten Korrekturfaktor und die gewählte Höhe bestimmt ist.

13. Tragbares Objekt nach Anspruch 12, **dadurch gekennzeichnet, dass** eine Vielzahl vorbestimmter Referenzwerte jeweils für eine Vielzahl vorgegebener Höhen $H_{Dj}$, j = 1 bis J, definiert ist, wobei jeder vorbestimmte Referenzwert auf der Grundlage mindestens einer theoretischen Funktion einer räumlichen Variablen in Bezug auf die genannte Rakete vom Start dieser Rakete bis zur jeweiligen vorgegebenen Höhe definiert ist, und dass die genannten Korrekturfaktoren jeweils gleich den genannten vorbestimmten Referenzwerten dividiert durch die genannten vorgegebenen Höhen sind.

14. Tragbares Objekt (2) nach einem der Ansprüche 7 bis 9 und 11, **dadurch gekennzeichnet, dass** der Beschleunigungssensor (8) durch ein mikroelektromechanisches System (MEMS) gebildet ist.

15. Tragbares Objekt (2) nach Anspruch 10, **dadurch gekennzeichnet, dass** der Beschleunigungssensor (8) durch ein mikroelektromechanisches System (MEMS) gebildet ist und dass der genannte vorbestimmte Referenzwert außerdem auf der Grundlage einer nominalen Bewegungsbeschleunigung $A_N(t)$ für die Rakete definiert ist.

16. Tragbares Objekt nach Anspruch 12 oder 13, **dadurch gekennzeichnet, dass** der Beschleunigungssensor durch ein mikroelektromechanisches System (MEMS) gebildet ist und dass jeder vorbestimmte Referenzwert außerdem auf der Grundlage einer nominalen Bewegungsbeschleunigung $A_N(t)$ für die Rakete definiert ist.

17. Tragbares Objekt (2) nach einem der Ansprüche 14 bis 16, **dadurch gekennzeichnet, dass** die Erkennungsvorrichtung (6) so eingerichtet ist, dass sie periodisch mit einer Messfrequenz $F_M$, einen Eigenbeschleunigungsvektor des tragbaren Objekts (2) in dem genannten dreidimensionalen Bezugssystem (10) mittels des Beschleunigungssensors (8) messen kann, wobei dieser Eigenbeschleunigungsvektor der Vektorsumme der auf das tragbare Objekt wirkenden Kräfte, mit Ausnahme der Schwerkraft, dividiert durch seine Masse entspricht, und dass in der elektronischen Einheit (12) für jede Messung die Norm $A_M(t_n)$ dieses gemessenen Eigenbeschleunigungsvektors beziehungsweise eine korrigierte Norm berechnet wird, die gleich der Norm $Am(t_n)$ vermindert um die Norm der Erdbeschleunigung ist, wobei tn gleich $n \cdot P$ ist, n eine Anzahl der seit dem Start der Rakete durchgeführten Messungen darstellt, die bei jeder weiteren Messung um eine Einheit erhöht wird, und P die durch die Messfrequenz definierte Zeitperiode ist; und dass die elektronische Einheit (12) eingerichtet ist, mindestens seit dem Start der Rakete eine doppelte Zeitintegration der Norm des Eigenbeschleunigungsvektors numerisch berechnen zu können. wobei diese Norm beziehungsweise die genannte Norm vermindert um die Norm der Erdbeschleunigung auf der Grundlage der genannten Normen $A_M(t_n)$ der periodisch gemessenen Eigenbeschleunigungsvektoren bestimmt wird, um Vergleichsdistanzen Dc(tm) für Zeitpunkte tm zu erhalten, wobei m eine positive ganze Zahl ist und jedes m einer genannten Zahl n entspricht; und **dadurch gekennzeichnet, dass** die Erkennungsvorrichtung (6) so eingerichtet ist, dass jede Vergleichsdistanz $D_C(t_m)$ mit einem im Speicher abgelegten vorbestimmten Referenzwert oder mit einem Referenzwert verglichen werden kann, der für eine ausgewählte Höhe Hs mittels eines Korrekturfaktors berechnet ist, um festzustellen, ob die Vergleichsdistanz Dc(tm) größer ist als der vorbestimmte Referenzwert beziehungsweise der berechnete Referenzwert.

18. Tragbares Objekt nach Anspruch 17, **dadurch gekennzeichnet, dass** die Berechnung der genannten doppelten Zeitintegration in der elektronischen Einheit darin besteht, eine doppelte Integration inkrementweise durchzuführen, indem nach jeder Messung des Eigenbeschleunigungsvektors ein konstanter Wert $A_C(t_n)$ für die Norm des Eigenbeschleunigungsvektors über jede Periode P zwischen den Zeitpunkten tn-1 und tn definiert wird, wobei dieser konstante Wert durch die Norm $A_M(t_n)$ und/oder die Norm $A_M(t_{n-1})$ bestimmt wird, wobei für jede Periode P ein Geschwindigkeitszuwachs berechnet wird, der dem genannten konstanten Wert beziehungsweise dem genannten konstanten Wert vermindert um die Norm der Erdbeschleunigung entspricht, um anschließend eine geschätzte Geschwindigkeit $V_E(t_n)$ zum Zeitpunkt tn sowie eine Elementardistanz dn auf der Grundlage des konstanten Werts $A_C(t_n)$, beziehungsweise dieses konstanten Werts vermindert um die Norm der Erdbeschleunigung und um die geschätzte Geschwindigkeit $V_E(t_{n-1})$ zum Zeitpunkt $t_{n-1}$, zu bestimmen, und anschließend die Elementardistanz dn zu der Summe der aus der vorherigen Messung des Eigenbeschleunigungsvektors erhaltenen Elementardistanzen d1 bis dn-1 zu addieren, um eine Vergleichsdistanz $D_C(t_n)$ für die Zeit tn zu erhalten.

19. Tragbares Objekt nach einem der Ansprüche 7 bis 18, **dadurch gekennzeichnet, dass** es visuelle, Vibrations- und/oder akustische Mittel aufweist, die so eingerichtet sind, dass ein Überschreiten der Kärmän-Linie durch das tragbare Objekt angezeigt werden kann, sobald die Erkennungsvorrichtung einen Durchgang der Kärmän-Linie durch das tragbare Objekt detektiert hat.

20. Tragbares Objekt (2) nach einem der Ansprüche 7 bis 19, **dadurch gekennzeichnet, dass** es eingerichtet ist, mindestens einen ersten Durchgang der Kärmän-Linie durch dieses tragbare Objekt, vorzugsweise jeden Durchgang der Kärmán-Linie durch das tragbare Objekt, zu speichern, und dass es Anzeigemittel (34) umfasst, die so eingerichtet sind, dass sie automatisch und/oder auf Anforderung anzeigen können, ob die Kärmán-Linie vom tragbaren Objekt überschritten wurde, vorzugsweise unter Angabe, wie oft dieses Ereignis aufgetreten ist.

21. Tragbares Objekt (2) nach Anspruch 20, **dadurch gekennzeichnet, dass** es eingerichtet ist, eine Detektion eines Durchgangs der Kärmän-Linie durch dieses tragbare Objekt, vorzugsweise jeder einzelnen Detektion, dauerhaft im Speicher abzulegen, wobei diese Speicherung in einem geschützten Teil (4a) des Speichers erfolgt, der so ausgeführt ist, dass ein Benutzer des tragbaren Objekts den geschützten Bereich nicht programmieren kann.

22. Tragbares Objekt (2) nach einem der Ansprüche 7 bis 21, **dadurch gekennzeichnet**, wobei es sich bei dem tragbaren Objekt um eine Uhr, insbesondere eine Armbanduhr, handelt.

**Claims**

1. Method for detecting the crossing of the Kármán line $L_K$, defined by a given altitude $H_D$ or by a selected altitude Hs, by a rocket of a given type, during a space flight of this rocket, by means of a portable object worn by a user and carried on board the rocket, this portable object comprising a memory, a time base and a detection device, this detection device being formed by an acceleration sensor, capable of measuring a proper acceleration vector of the portable object in a three-dimensional coordinate frame of this portable object, and by an electronic unit arranged so as to be able to process measurements supplied by the acceleration sensor, the proper acceleration vector of the portable object being equal to the vector sum of the forces to which this portable object is subjected, except for the force of gravity, divided by its mass; the detection method comprising a preliminary phase, which is preliminary to the portable object being placed on board the rocket for said space flight, comprising the following preliminary steps of:

- providing a nominal acceleration of motion $A_N$ (t) for the rocket of the given type, as a function of time t, from rocket take-off, defining a time zero, at least up to a crossing of said given altitude $H_D$, this nominal acceleration of motion being a scalar value in a unit equal to the gravitational pull of the Earth;
- providing a theoretical tilt angle $\theta_T(t)$ for the rocket of the given type, relative to a horizontal plane and as a function of time t, from rocket take-off until at least one crossing of the given altitude $H_D$;
- determining or providing a theoretical time of flight $T_K$ for the rocket of the given type from rocket take-off to the crossing of the given altitude $H_D$;
- on the basis of said nominal acceleration of motion and of said theoretical angle of inclination, determining a theoretical proper acceleration $A_{PT}$ (t), as a function of time, for the rocket of the given type, the value of this theoretical proper acceleration being defined, in a unit equal to the Earth's attraction, by the following formula:

$$A_{PT}(t) = \sqrt{1 + 2 \cdot A_N(t) \cdot \sin \theta_T(t) + A_N^2(t)}$$

- calculating, by numerical and/or mathematical means, a theoretical measurement distance $D_{MT}$ defined by a double integration of the theoretical proper acceleration $A_{PT}$ (t), between time zero (t = 0) corresponding to rocket take-off and time $T_K$ corresponding to the theoretical time of flight, or of this theoretical proper acceleration less the norm of the gravitational acceleration; the theoretical measurement distance $D_{MT}$ divided by the given altitude $H_D$ for the Kármán line $L_K$ defining, for the rocket of the given type, a correction factor Fc;
- recording the theoretical measurement distance $D_{MT}$ and/or the correction factor $F_C$ in the memory of the portable object, this correction factor $F_C$ then being, where applicable, multiplied in the electronic unit by the selected altitude Hs, before rocket take-off defining a start of said space flight, so as to obtain a reference distance $D_{MR}$;
- before rocket take-off, activating the detection device of the portable object on board this rocket;

the detection method then comprising a detection phase comprising the following detection steps of:

- periodically measuring, at a measurement frequency $F_M$, the proper acceleration vector of the portable object by means of the detection device, and calculating in the electronic unit, for each measurement, the norm $A_M(t_n)$ of this measured proper acceleration vector, respectively a corrected norm equal to the norm $A_M(t_n)$ less the norm of the gravitational acceleration, $t_n$ being a time equal to n·P where n is a number of measurements carried out at least since rocket take-off, incremented by one unit with each new measurement, and P is the time period defined by said measurement frequency;

- calculating numerically, in the electronic unit, a double integral over time, from rocket take-off, respectively at least from rocket take-off, of the norm of the proper acceleration vector of the portable object, respectively of this norm less the norm of the gravitational acceleration, the norm of the proper acceleration vector being determined on the basis of said norms $A_M(t_n)$ of the proper acceleration vectors measured periodically, in order to obtain comparison distances $D_C(t_m)$ for times $t_m$, where m is a positive integer, each m corresponding to one said number n;

- comparing each comparison distance $D_C(t_m)$ with the theoretical measurement distance $D_{MT}$ in the case of a given altitude $H_D$, or respectively with the reference distance $D_{MR}$ in the case of a selected altitude Hs and, when a comparison distance $D_C(t_m)$ is greater than the theoretical measurement distance $D_{MT}$, or respectively the reference distance $D_{MR}$, recording, in the memory of the portable object, a detection, by the detection device, of the crossing of the Kármán line by this portable object.

2. Detection method according to claim 1, **characterised in that** the step of calculating, in the electronic unit, the double integral over time of the norm of the proper acceleration vector of the portable object, or respectively of this norm less the norm of the gravitational acceleration consists in performing a double integral by increments by defining, after each measurement of the proper acceleration vector, a constant value $A_C(t_n)$ for the norm of the proper acceleration vector over each period P between the times $t_{n-1}$ and $t_n$, this constant value being determined by the norm $A_M(t_n)$ and/or by the norm $A_M(t_{n-1})$, to calculate, for each period P, an increase in velocity corresponding to said constant value, or respectively to the constant value less the norm of the gravitational acceleration, in order then to determine an estimated velocity $V_E(t_n)$ at the time $t_n$, and an elementary distance $d_n$ on the basis of the constant value $A_C(t_n)$, respectively of this constant value less the norm of the gravitational acceleration and of the estimated velocity $V_E(t_{n-1})$ at the time $t_{n-1}$, and then adding the elementary distance $d_n$ to the sum of the elementary distances $d_1$ to $d_{n-1}$, obtained at the end of the previous measurement of the proper acceleration vector, to obtain a comparison distance $D_C(t_n)$ for the time $t_n$.

3. Detection method according to claim 1 or 2, **characterised in that** said theoretical time of flight $T_K$ is determined on the basis of the nominal acceleration of motion and the theoretical tilt angle, in the preliminary phase by the mathematical and/or numerical resolution of the following equation, where $H_D$ is said given altitude and the time T is a variable:

$$H_D = H_{FT}(T) = \int_0^T V_N(t) \cdot \sin \theta_T(t) \cdot dt, \text{ where } V_N(t) = \int_0^t A_N(t) \cdot dt$$

4. Detection method according to any one of claims 1 to 3, **characterised in that** said selected altitude Hs is determined as a function of a tilt angle of said rocket which is selected for the crossing of the Kármán line by this rocket and supplied to the portable object prior to a space flight with the rocket.

5. Detection method according to any one of claims 1 to 4, **characterised in that** the theoretical measurement distance is determined for each given altitude of a plurality of distinct given altitudes $H_{Dj}$, j = 1 to J, which can be selected, each theoretical measurement distance $D_{MTj}$ and/or each corresponding correction factor $F_{Cj}$ being stored in the memory of the portable object to allow one of the theoretical measurement distances $D_{MTj}$ or one of the correction factors $F_{Cj}$ to be selected, either directly or by selecting an altitude for the Kármán limit.

6. Detection method according to any one of claims 1 to 5, **characterised in that** the acceleration sensor is formed by a microelectromechanical system (MEMS).

7. Portable object (2) capable of being worn by a user comprising a memory (4), a time base and a detection device (6), which is formed by an acceleration sensor (8), capable of measuring an acceleration vector of the portable object in a three-dimensional coordinate frame (10) linked to this portable object, and by an electronic unit (12) arranged so as to be able to process measurements supplied by the acceleration sensor; **characterised in that** the detection device (6) is arranged to be able to autonomously detect, during a space flight of a rocket of a given type, a crossing of the Kármán line $L_K$ by the portable object on board this rocket, the Kármán line $L_K$ being defined by a given altitude $H_D$ or an altitude Hs that can be selected by the user, either directly or by selecting another spatial variable; **in that** a crossing of the Kármán line by the portable object can be detected by the electronic unit (12) on the basis of periodic measurements of the acceleration vector of the portable object, carried out by the acceleration sensor from rocket take-off until the crossing of the Kármán line $L_K$, and either of a predetermined reference value which is stored prior to said take-off in the memory (4), or of a reference value calculated in the electronic unit (12) and determined by a correction factor Fc, which is predetermined and stored prior to said take-off in the memory, and an altitude Hs selected by the user for the Kármán line prior to said take-off, the predetermined reference value and the correction factor $F_C$ being relative to said given altitude $H_D$; and **in that** the electronic unit is arranged such that it can calculate the changes to a comparison distance over time on the basis of said periodic measurements of the acceleration vector of the portable object, and compare this comparison distance over time with the predetermined reference value, respectively with said calculated reference value, so as to be able to detect a crossing of the Kármán line by the portable object.

8. Portable object (2) according to claim 7, **characterised in that** the detection device (6) is arranged so that the comparison distance is calculated on the basis of the norms of the acceleration vectors measured by the acceleration sensor (8) in said three-dimensional coordinate frame (10), the electronic unit (12) being arranged such that it can calculate these norms.

9. Portable object according to claim 7 or 8, **characterised in that** said correction factor $F_C$ is equal to said predetermined reference value divided by said given altitude $H_D$.

10. Portable object according to any one of claims 7 to 9, **characterised in that** said predetermined reference value is defined on the basis of at least one theoretical function of a spatial variable relating to said rocket, from rocket take-off to said given altitude $H_D$ for the Kármán line $L_K$.

11. Portable object (2) according to claim 7 or 8, **characterised in that** the memory (4) can contain a plurality of predetermined reference values which are respectively relative to a plurality of given altitudes $H_{Dj}$, j = 1 to J, each of the predetermined reference values being defined on the basis of at least one theoretical function of a spatial variable relative to said rocket, from rocket take-off to the corresponding given altitude, each of the given altitudes being selectable by a user to allow for comparison over time of said comparison distance, calculated when the portable object is detected to have crossed the Kármán line, with the corresponding predetermined reference value.

12. Portable object (2) according to any one of claims 7 to 10, **characterised in that** the memory (4) can contain a plurality of correction factors relating respectively to a plurality of given altitudes $H_{Dj}$, j = 1 to J, each of the correction factors being selectable as a function of an altitude selected, by a user, for the Kármán line $L_K$ to allow for comparison over time of said comparison distance, calculated when the portable object is detected to have crossed the Kármán line, with a reference value determined by the selected correction factor and the selected altitude.

13. Portable object according to claim 12, **characterised in that** a plurality of predetermined reference values are respectively defined for the plurality of given altitudes $H_{Dj}$, each of the predetermined reference values being defined on the basis of at least one theoretical function of a spatial variable relating to said rocket, from rocket take-off to the corresponding given altitude; and **in that** said correction factors are respectively equal to said predetermined reference values respectively divided by said given altitudes.

14. Portable object (2) according to any one of claims 7 to 9 and 11, **characterised in that** the acceleration sensor (8) is formed by a microelectromechanical system (MEMS).

15. Portable object (2) according to claim 10, **characterised in that** the acceleration sensor (8) is formed by a microelectromechanical system (MEMS); and **in that** said predetermined reference value is further defined on the basis of a nominal acceleration of motion $A_N(t)$ for the rocket.

16. Portable object according to claim 12 or 13, **characterised in that** the acceleration sensor is formed by a microelectromechanical system (MEMS); and **in that** each predetermined reference value is further defined on the basis of a nominal acceleration of motion $A_N(t)$ for the rocket.

17. Portable object (2) according to any one of claims 14 to 16, **characterised in that** the detection device (6) is arranged such that it can periodically measure, at a measurement frequency $F_M$, a proper acceleration vector of the portable object (2) in said three-dimensional coordinate frame (10) by means of the acceleration sensor (8), this proper acceleration vector being equal to the vector sum of the forces to which the portable object is subjected, except for the force of gravity, divided by its mass, and calculating, in the electronic unit (12), for each measurement, the norm $A_M(t_n)$

of this measured proper acceleration vector, respectively a corrected norm equal to the norm $A_M(t_n)$ less the norm of the gravitational acceleration, $t_n$ being equal to $n \cdot P$ where n is a number of measurements carried out at least since rocket take-off, incremented by one unit with each successive measurement, and P is the time period defined by the measurement frequency; **in that** the electronic unit (12) is arranged such that it can numerically calculate a double integral over time, at least from rocket take-off, of the norm of the proper acceleration vector of the portable object, respectively of this norm less the norm of the gravitational acceleration, the norm of the proper acceleration vector being determined on the basis of said norms $A_M(t_n)$ of the proper acceleration vectors measured periodically, in order to obtain comparison distances $D_C(t_m)$ for times $t_m$, where m is a positive integer, each m corresponding to one said number n; and **in that** the detection device (6) is arranged such that it can compare each comparison distance $D_C(t_m)$ with a said predetermined reference value, stored in memory, or with a said reference value, obtained for a selected altitude Hs via a said correction factor, and thus detect whether the comparison distance $D_C(t_m)$ is greater than this predetermined reference value or greater than this reference value.

18. Portable object according to claim 17, **characterised in that** the calculation of said double integral over time, performed in the electronic unit, consists in performing a double integral by increments by defining, after each measurement of the proper acceleration vector, a constant value $A_C(t_n)$ for the norm of the proper acceleration vector over each period P between the times $t_{n-1}$ and $t_n$, this constant value being determined by the norm $A_M(t_n)$ and/or by the norm $A_M(t_{n-1})$, to calculate, for each period P, an increase in velocity corresponding to said constant value, or respectively to the constant value less the norm of the gravitational acceleration, in order then to determine an estimated velocity $V_E(t_n)$ at the time $t_n$, and an elementary distance $d_n$ on the basis of the constant value $A_C(t_n)$, respectively of this constant value less the norm of the gravitational acceleration and of the estimated velocity $V_E(t_{n-1})$ at the time $t_{n-1}$, and then adding the elementary distance $d_n$ to the sum of the elementary distances $d_1$ to $d_{n-1}$, obtained at the end of the previous measurement of the proper acceleration vector, to obtain a comparison distance $D_C(t_n)$ for the time $t_n$.

19. Portable object according to any one of claims 7 to 18, **characterised in that** it comprises visual and/or vibratory means, and/or audible means, arranged to be able to indicate that the portable object has crossed the Kármán line as soon as the detection device has detected that the portable object has crossed the Kármán line.

20. Portable object (2) according to any one of claims 7 to 19, **characterised in that** it is arranged to record at least a first crossing of the Kármán line by this portable object, and preferably each crossing of the Kármán line by the portable object; and **in that** it comprises display means (34) arranged to be able to indicate automatically and/or on command whether the Kármán line has been crossed by the portable object and, preferably, to indicate a number of times that this event has taken place.

21. Portable object (2) according to claim 20, **characterised in that** it is arranged so as to be able to permanently record in the memory a detection of a crossing of the Kármán line by this portable object, preferably each detection, this recording being made in a protected part (4a) of the memory, so that a user of the portable object cannot program the protected part.

22. Portable object (2) according to any one of claims 7 to 21, **characterised in that** this portable object is a watch, in particular a wristwatch.

# Fig. 1

# Fig. 2

# Fig. 3

## Fig. 4

## Fig. 5

## Fig. 6

Fig. 7A

Fig. 7B

Fig. 7C

Fig. 7D

Fig. 8A

Fig. 8B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008130418 A1

- CH 711684 A2